# EUROPÄISCHE PATENTSCHRIFT

(11) **EP 4 179 028 B1**
(45) Veröffentlichungstag und Bekanntmachung des Hinweises auf die Patenterteilung: **18.11.2026**
(21) Anmeldenummer: 21751963.6
(22) Anmeldetag: 11.07.2021
(51) Int. Cl.: C09C 1/00, B41M 5/00, C09D 5/02, C09D 7/61, G01S 7/40, H01Q 1/00, H01Q 3/00, B05D 3/00, B05D 3/06, G01S 7/02, H01Q 1/42

(54) **LASER NACHBEHANDLUNG VON METALLEFFEKTPIGMENTFLÄCHEN ZUR LOKALEN ERHÖHUNG DER RADAR- UND/ ODER LICHTTRANSMISSION**
LASER POST TREATMENT OF METAL EFFECT PIGMENT SURFACES FOR LOCALLY INCREASING RADAR AND/OR LIGHT TRANSMISSION
POST-TRAITEMENT LASER DE SURFACES PIGMENTAIRES À EFFET MÉTALLIQUE POUR AUGMENTER LOCALEMENT LA TRANSMISSION RADAR ET/OU LUMINEUSE

(30) Priorität: 11.07.2020 DE 102020118344
(43) Veröffentlichungstag der Anmeldung: 17.05.2023
(73) Patentinhaber: Schlenk Metallic Pigments GmbH, 91154 Roth (DE)
(72) Erfinder: MAILE, Frank Jochen, 91154 Roth (DE)
(74) Vertreter: Stütz, Jan
(86) Internationale Anmeldenummer: PCT/DE2021/100605
(87) Internationale Veröffentlichungsnummer: WO 2022/012718

(56) Entgegenhaltungen:
- EP-A1- 2 144 764
- EP-A1- 2 144 764
- KR-A- 20170 047 070
- KR-A- 20170 047 070
- US-A1- 2010 043 963
- US-A1- 2010 043 963

## Beschreibung

Die vorliegende Erfindung betrifft ein Markierungsverfahren und/ oder Feinmusterungsverfahren von Metalleffektpigmentflächen, Interferenz-Metalleffektpigmentflächen und pigmenthaltigen Gegenständen zur dauerhaften lokalen Erhöhung der Transparenz, Transluzenz oder Transmission für elektromagnetische Wellen, insbesondere Radarwellen, Radiowellen und/ oder Lichtwellen, und/ oder lokale Reduzierung der Reflektanz.

Die vorliegende Erfindung betrifft auch die Erzeugnisse des Verfahrens, z. B. mit Metalleffektpigmenten lackierte Kunststoffkarosserieteile, die für Radarwellen durchlässiger gemacht worden sind, Gegenstände wie Kosmetikflaschen oder Kfz-Bedienelemente und Mobiltelefone, die nachträglich mit transparenten, transluzenten oder hinterbeleuchtbaren Symbolen beschriftet worden sind.

Ebenso betrifft die vorliegende Erfindung die Verwendung von geeigneten Metalleffektpigmenten oder metallhaltigen Partikeln mit dünnen Metallschichten sowie Druckfarben, Lacke, Masterbatches und Interferenz-Metalleffektpigmenten zur Durchführung des Verfahrens. Die Erfindung betrifft auch Gegenstände, die solche geeigneten Partikel, bzw. Pigmente beinhalten und für Anwendung des Verfahrens optimiert bzw. vorgesehen sind, zum Beispiel durch Einsatz von geeigneten laserempfindlichen Füllstoffen, die eine chemische Reaktion oder physische Verformung des Metallanteils der Pigmente oder metallhaltigen Partikel begünstigen.

### Stand der Technik

In der Automobilindustrie werden zunehmend Radarsensoren in Fahrzeugen verwendet. Um künftig autonomes Fahren zu ermöglichen, müssen Radarsensoren überall um das Fahrzeug herum montiert werden. Deswegen müssen diese Radarsensoren hinter Kunststoffkarosserieteilen montiert werden, die in Fahrzeugfarbe lackiert sind.

Metalleffektpigmente als Bestandteil des Basislacks sind bei Autolackierungen weit verbreitet, und von Kunden sehr gefragt.

Leider verursachen diese Metalleffektpigmente sowohl Reflexionen der Radarstrahlen, als auch sicherheitsrelevante Änderungen der Richtcharakteristik der Radarantennen. Insbesondere kann die Ortung eines Hindernisses dadurch stark verfälscht werden, weil der Abstrahlwinkel der Antenne durch die Lackschicht verändert wird. Dabei ist die Verfälschung auch abhängig von der Wagenfarbe und dem Metallanteil in der Beschichtung. Ein großes Problem besteht insbesondere in der Reparatur von original lackierten Automobilteilen nach Lackbeschädigung, da der Prozess der (meist händisch) ausgeführten Reparaturlackierung nur eine unzureichende Kontrolle über den für die Radartransmission wichtigen Parameter der Lack-Schichtdicke zulässt.

Seit langem wurde versucht, Lösungen für diese Problematik zu finden, bislang aber weitgehend ohne Erfolg.

Diese Probleme wurden in DE102014222837A1 kompetent erläutert und wurden in der Dissertation von F. Pfeiffer, "Analyse und Optimierung von Radomen für automobile Radarsensoren", Technische Universität München 2010, quantifiziert.

Das Problem der Beeinflussung von Radarstrahlen für Millimeterwellen im Frequenzbereich um 75 GHz durch verschiedene Metallpigmentbasislacke wurde gemessen und beispielsweise in Tabelle 4.5, Seite 46 der besagten Dissertation verdeutlicht. Der Metallanteil scheint dabei eine große Rolle zu spielen.

Insbesondere bei hohem Metallanteil (z.B. Hellsilber Metallic) in dem Basislack eines kurvenreichen Karosserieteils werden hohe Reflexionen des Radarstrahls verursacht, die starke Verzerrungen der Richtcharakteristik der Antenne, Dämpfung, sowie eine Verfälschung des Abstrahlwinkels verursachen.

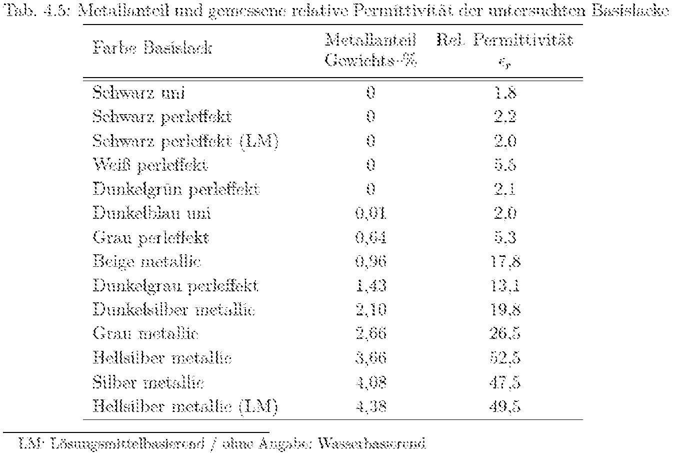

Die vom Autor vorgeschlagene Lösung, *eine induktiv oder kapazitiv wirkende Vorrichtung hinzufügen, die eine von der Lackschicht hervorgerufene Reflexion der elektromagnetischen Strahlung* (5) *des Radarsensors wenigstens teilweise kompensiert,* wurde unter EP2151889A1 (Audi AG) patentiert.

Diese Lösung aus dem Stand der Technik (ähnlich eines Schwingkreises) muss aber je nach Lack und Schichtdicke sorgfältig angepasst werden.

Die doppelte Lackierungsmethode verlangt sogar, dass die Dicke des Stoßfängers von dem verwendeten Lack abhängig gemacht wird, was in der Autoindustrie zu Problemen führt.

Des Weiteren ist diese Lösung nicht breitbandig genug und für breitere Sichtwinkel des Radars kaum geeignet.

Ein weiterer Nachteil der Lösung aus dem Stand der Technik ist für die Autoindustrie, die notwendige Optimierung abhängig vom Pigment/ Lacksystem und der Lackdicke. Fertigungsprobleme würden damit je nach Wagenfarbe vorprogrammiert.

Auch eine Neulackierung, beispielsweise nach einem Kratzer im Bereich des Radoms, wird problematisch und muss je nach Form des Karosserieteils, das den Radar beherbergt, durch aufwändige Modellierung neu optimiert werden. Dies ist für Autohersteller, die eher eine universelle Lösung suchen, insgesamt sehr problematisch.

Mehrere Radarhersteller versuchen daher, Radargeräte einzusetzen, die sich soweit möglich selbst an die verschiedenen Metallpigmentlacke anpassen können. In vielen Fällen ist aber eine zuverlässige Anpassung kaum möglich, insbesondere bei hohem Metallanteil des Basislacks.

Gemäß DE102014222837A1 oder DE102016001310A1 wird gar nicht versucht, den Einfluss des Lacks zu ändern oder zu reduzieren, sondern adaptiv das Problem der Dämpfung, der Reflektionen und Antennen-Richtwertcharakteristiken und Verzerrungen durch kompensierende Steuerung der Elektronik zu lösen.

Andere Dokumente wie EP1462817A1 lehren, die durch ungewollte Reflexionen verzerrte Richtcharakteristik der Antenne mit absorbierenden Materialien wieder im Griff zu bekommen. Dies führt aber nicht zu einer lackierungsunabhängigen Lösung, weil die Verzerrungen der Richtcharakteristik und ungewollte Reflexionen lackabhängig sind. Die erforderlichen Absorbierlösungen wären auch lackabhängig.

Aus DE19819709A1**,** DE10026454C1 und DE102007059758A1 ist bekannt, Radargeräte hinter einer Metallschicht zu verstecken, die so dünn ist, dass sie für die Radarwellen transparent bleibt, und als Radom dienen kann, obwohl sie das Licht reflektiert. Die Gestaltung dieser Metallschicht vor der Radarantenne ist ganz frei, solange sie dünn genug ist (in der Praxis wesentlich dünner als die "skin depth" für Radarwellen, aber wesentlich dicker als die "skin depth" für menschlich sichtbare Wellenlängen). Als Beispiel wurde ein 100 nm dünnes Daimler Emblem mitten im Kühlergrill vor einem Radargerät genannt. In KR 2017 0047070 A wird beschrieben, dass der Gewichtsanteil der Pigmente in einer dekorativen Lackschicht nicht über 30% liegen darf, um die Radarwellen nicht zu blockieren. Um die optischen Eigenschaften der Metallschicht an das Emblem anzupassen, wird vorgeschlagen, einen Teil einer dekorativen Lackschicht mittels Laser-Ätzen zu entfernen, um eine einheitliche optische Wirkung mit dem Emblem oder dem Kühler zu erzielen.

Eine elektromagnetische Welle, die senkrecht auf eine homogene Metallfläche zukommt, wird normalerweise fast vollständig reflektiert, u. A. weil die Fläche in Prinzip äquipotential ist, wenn sie perfekt leitend ist. Das elektrische Feld E im Metall wird durch dessen Leitfähigkeit annulliert, als ob zu dem elektrischen Feldvektor eine gegenseitige Welle mit entgegengesetztem Feldvektor vorhanden wäre.

In der Praxis wird jedoch die ankommende Welle nicht direkt an der Oberfläche geschwächt, weil die Leitfähigkeit des Metalls nicht unendlich ist, sodass die elektrische Feldkomponente E der elektromagnetischen Welle nicht gleich an der Oberfläche annulliert wird. Stattdessen dringt die elektrische Feldkomponente E mit der Welle etwas tiefer ins leitende Material ein und wird dort exponentiell geschwächt, je tiefer die Welle eindringt. Die Durchdringungstiefe der elektromagnetischen Welle in einem homogenen Metall ist von der inversen Wurzel der Frequenz der Welle abhängig. Bei 300 nm Tiefe in Aluminium ist nur noch 37% einer ankommende 76GHz Radarwelle vorhanden. Bei einer dielektrischen Lackschicht, die voneinander isolierte Aluminiumplättchen beinhaltet, ist ebenfalls eine exponentielle Abschwächung zu beobachten, jedoch ist die Abschwächung nicht so stark.

Die in der Autoindustrie üblicherweise verwendete Metallpigment-Basislack-Dicke ist farbtonabhängig und beträgt ca. 15 Mikrometer und verhält sich für Radarwellen wegen der unvermeidbaren Streukapazität zwischen teilüberlappenden Metallpigmentplättchen fast wie eine homogene, leitende Metallisierung, die fast zwei Größenordnungen dicker wäre, als die gemäß obiger Lehre empfohlene Höchstgrenze der Metallisierungsdicke.

Dieses Phänomen der Streukapazität zwischen den einzelnen Pigmentplättchen kann auch als Grenzflächenpolarisation erklärt werden.

Dickere Metallelemente im Pfad der Mikrowelle dürfen nach der Lehre von DE 19644164A1 (Bosch) nie breiter als Lambda/10 (Lambda=Wellenlänge, d.h. 4 Millimeter bei einer 76 GHz Radarwelle) sein, damit sie für die Mikrowellen praktisch transparent bleiben. Bei einer 76 GHz Radarwelle dürfen also etwaige Metallelemente vor der Antenne nicht mehr als 0,4 Millimeter breit sein.

Diese Bedingung ist aber nur bei Metalleffektpigmentplättchen erfüllt, wenn diese weit genug voneinander entfernt sind. Bei herkömmlichen Metalleffektlacken ist das aber nicht der Fall, weil die Metallpigmentdichte in der Basislack-Matrix hoch genug sein muss, um für ausreichendes Deckvermögen zu sorgen, und hierdurch Überlappungen der Pigmente entstehen. Mit der Häufigkeit der PigmentÜberlappungen nimmt aber auch die Streukapazität und Grenzflächenpolarisation zu. Bei zunehmender Pigmentdichte verhält sich der Lack mehr und mehr wie eine homogene Metallschicht, da die Pigmente durch die Streukapazitäten bei so hohen Frequenzen wie miteinander elektrisch verbunden erscheinen.

Da die Radarprobleme mit dem Pigmentanteil einer Autolackierung zunehmen, wurde auch versucht, Metalleffektlacke aus metallarmen Pigmentmischungen zu simulieren. Bei solchen Mischungen werden einem kleinen Anteil an Metalleffektpigmenten ein größerer Anteil an Perlglanzpigmenten hinzugefügt, wobei Letztere meist für Radarwellen unproblematisch sind, da sie auf einem dielektrischen, lichtdurchlässigen Kern aufgebaut sind. Durch die Beimischung wird allerdings zwangsläufig der optische Gesamteindruck der lackierten Teile etwas weniger metallisch aussehen, als bei herkömmlichen Karosserieteilen, was nicht unbedingt gewünscht ist.

Diese Dokumente zeigen zwar, dass das Problem der Metalllacke bekannt ist, offenbaren aber keine lackunabhängige Lösung für vollwertige Metalleffekt-Lacke.

Die Autoindustrie benötigt dringend eine lackunabhängige und fast unsichtbare Radarwellentransmission-Lösung, die mit vollwertigen Metalleffektpigment-Lackierungen kompatibel ist, und die auch mit einer Vielzahl von herkömmlichen Lackierungsverfahren (sprühen, tauchen, elektrostatisch u.v.m.) kompatibel ist.

### Aufgabe und Lösungen

Die **erste Aufgabe** der Erfindung betrifft demnach ein Verfahren zur Erhöhung der Transmission von Radarwellen in mit Metalleffektpigmenten oder metallhaltigen Partikeln lackierten Karosserieteilen, wobei störende Metalleffektpigmente bzw. metallhaltigen Partikel im Pfad der Radarstrahlen in dem fertig lackierten Karosserieteil vor den Radarsensoren eliminiert werden, bevorzugt ohne die pigmenthaltige Lackschicht für das menschliche Auge erkennbar zu markieren oder zu beschädigen.

Es hat sich überraschend gezeigt, dass die durch das erfindungsgemäße Verfahren erzielbare Erhöhung der Transmission für die Radarwellen als Nebeneffekt auch für eine Erhöhung der Transmission für Lichtwellen mitverantwortlich ist, in anderen Worten kann die behandelte metalleffektpigmentierte Fläche oder interferenz-metalleffektpigmentierte bzw. allgemein die mit metallhaltigen Partikeln versehene Fläche transparent oder transluzent werden, was weitere Anwendungen ermöglicht, wie beispielsweise die nachträgliche Markierung von transparenten Symbolen oder Motiven auf hinterbeleuchteten Bedienelementen, spiegelnden Gegenständen oder Kosmetikflächen.

Damit ergibt sich eine **zweite,** überraschende aber ebenso wichtige **Aufgabe** des erfindungsgemäßen Verfahrens, nämlich reflektierende Metalleffektpigmente oder metallhaltige Partikel mittels Laserbehandlung im Wesentlichen transparent, transluzent oder unsichtbar und kaum mehr reflektierend zu machen.

Da die mit dem Verfahren behandelten Stellen nahezu transparent werden, stellt sich weiterhin eine **dritte Aufgabe,** nämlich wie die von der Behandlung betroffene Fläche reduziert werden kann, und so dünn gezeichnet werden kann, dass sie mit dem bloßen Auge nicht oder kaum bemerkbar ist und dennoch die Transmission der Radarwellen erhöht.

Aus US3975738 (US Air Force, 1976, slotted radome für Kampfflugzeuge) ist beispielsweise ein geeignetes Y-Öffnungen Muster bekannt, das für jede Polarisation der Radarwelle durchlässig sein soll.

Zwar betrifft die Offenbarung keine Metalllacke, sondern nur homogene Metallflächen, die Radarwellendurchlässig gemacht werden müssen, die Lehre aus dem Slot-Antennenbereich scheint dennoch als Teillösung anwendbar, und dessen Anwendbarkeit bei laserbemusterten Metalleffektlacken wurde durch Experimente bestätigt.

Insbesondere die wellenlängenabhängigen optimierten Abmessungen eines Y-slots werden sehr übersichtlich numerisch präzise angegeben, insbesondere die Breite der Linien, die transparent werden sollen.

Die in US3975738 offenbarte Schlitzbreite beträgt 0,0175 Lambda, bei einer Wellenlänge von 4 Millimetern entspricht dies einer Strichbreite von 70 Mikrometern, was auf dem Lack für das bloße Auge unsichtbar wäre.

Diese Abmessungen sind wohl das Ergebnis einer sehr sorgfältigen Optimierungskampagne für scannende Angriffsradars, wobei sich die Inzidenz der Radarwelle an dem Radom ständig ändert, was auch für fortgeschrittene Radartechnik bei Autos notwendig ist.

Die der Erfindung zugrundeliegende Aufgabe(n) wird/ werden durch das Verfahren und den Gegenstand der unabhängigen Ansprüche gelöst. Die abhängigen Ansprüche stellen bevorzugte Ausführungsformen dar.

Gegenstand der vorliegende Erfindung ist unter anderem ein Verfahren, das die obengenannten Aufgaben löst, wobei eine Nachbehandlung von Gegenständen, welche dünne Metallplättchen bzw. metallhaltige Partikel enthalten, durch Lichteintrag oder Hitzeeintrag erfolgt, vorzugsweise durch einen Laser, insbesondere einen gepulsten Nd-YAG Laser für eine Lasermarkierung, um eine nachträgliche physische oder chemische Änderung der Metallplättchen bzw. metallhaltigen Partikel in einer dielektrische Matrix zu bewirken, wodurch das Deckvermögen der Metallplättchen bzw. metallhaltigen Partikel dauerhaft und markant verringert wird und die Transmission des Gegenstands für elektromagnetischen Wellen (Lichtwellen, Radarwellen, Radiowellen) erhöht wird. Die Metallplättchen können dabei Metalleffektpigmente, Interferenz-Metalleffektpigmente oder ganz allgemein metallhaltige Partikel sein.

### Abbildungen

- Fig. 1: zeigt, wie die Grenzpolarisation und Streukapazitanz zwischen Metallpigmenten in einem Basislack die Radarwellen-Transmission negativ beeinflusst (Dissertation von F. Pfeiffer, "Analyse und Optimierung von Radomen für automobile Radarsensoren", Technische Universität München 2010);
- Fig. 2: zeigt die in US Patent US3975738 (Stand der Technik, US Air Force, 1976) empfohlene omnipolare Schlitzanordnung und Schlitzabmessungen für Metallradome eines Kampfflugzeuges;
- Fig. 3: zeigt die Hauptmerkmale und Effektbeispiele der verschiedenen herkömmlichen Lasermarkierungsverfahren als Stand der Technik aus dem Buch Oberflächentechnik, Autor: Dr. Feist;
- Fig. 4: zeigt die Nachbehandlung einer metallpigmentierten Schicht zur Transparenzerhöhung gemäß der vorliegenden Erfindung;
- Fig. 5: zeigt Bilder von Formänderungen der erfindungsgemäß laserbehandelten Pigmente;
- Fig. 6: zeigt den Einfluss der Zersetzung von Füllstoffen, welche für die Verwandlungen und die Pigmentüberreste von Fig. 5 verantwortlich sind;
- Fig. 7: zeigt, wie Interferenz-Metalleffektpigmente mit dünnem Kern relativ brandsicher sind;
- Fig. 8: zeigt, wie bevorzugte Nd-YAG Laserparameter durch Versuchsfelder bestimmt werden;
- Fig. 9: zeigt, dass die Metalleffektpigmente im Laser-markierten Bereich meist nicht mehr sichtbar sind und zwar nicht nur direkt an der Oberfläche;
- Fig. 10: zeigt eine Testmatrix zur weiteren Ermittlung von Laserparametern für die Erfindung, sowie einige Testergebnisse mit unterschiedlichen Pulsabständen bei einem dunklen, niedrig dosierten "Chromos" Metalleffektpigment mit besonders dünnem Aluminiumkern und Silica Schutzschicht;
- Fig. 11: zeigt, wie die Streuparameter, insbesondere die Eingangsreflexion S₁₁ und ggf. Vorwärtstransmission S₂₁ einer laserbehandelten Lackprobe im Vergleich zu einer unbehandelten Lackprobe experimentell mit einem Netzwerkanalysator als Funktion der Frequenz gemessen werden;
- Fig.12: zeigt, wie die Streuparameter, insbesondere die Freiraum Eingangsreflexion S₁₁ und ggf. Freiraum Vorwärtstransmission S₂₁ eines Metalllack-Schlitzradomprototyps im Vergleich zu einer unbehandelten Lackprobe experimentell mit einem Netzwerkanalysator als Funktion der Frequenz gemessen werden;
- Fig.13: zeigt ein Detail eines Schlitzradomprototypen aus gelasertem Interferenz-Metalleffektpigmentlack "Zenexo GoldenShine" mit Y-Schlitzprofil auf einem Kunststoffkarosserieteil;
- Fig. 14: zeigt ein Radombeispiel mit silbrigem Aluminiumpigment AluStar, wobei die Laserung des Basislacks durch 40 Mikrometer Klarlack erfolgt ist;
- Fig. 15: zeigt die experimentell gemessene Reflexion S11 und Transmission S21 der Radomausführungen u.a. gemäß Fig.14.

### Detaillierte Beschreibung

Die vorliegende Erfindung betrifft ein Nachbehandlungsverfahren und/ oder Feinmusterungsverfahren von metallpigmenthaltigen Gegenständen, beispielsweise Karosserieteilen oder Kosmetikbehältern oder Schichten, beispielsweise Lackschichten oder Druckfarbenschichten, bei denen mittels Hitzeeintrag das Deckvermögen der metallhaltigen Pigmentplättchen, beispielsweise Metalleffektpigmenten oder Interferenz-Metalleffektpigmenten durch deren Formfaktoränderung dauerhaft reduziert wird.

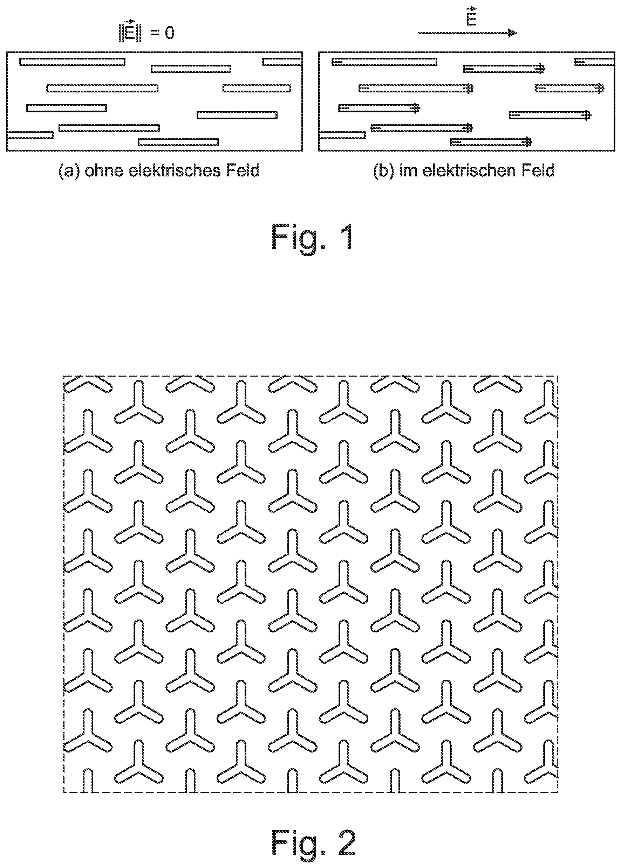

Die vorliegende Erfindung ist für die Zukunft des autonomen Fahrens deshalb wichtig, weil metalleffektpigmenthaltige Lackierungen die den Radarempfang stören. Wie in Fig. 1 dargestellt formen zwei überlappende Metallpigmente in dem Lack einen Kondensator und sind somit für GHz Frequenzen wie elektrisch miteinander verbunden. Aus diesem Grund ist eine Lösung so wichtig, die Lacke für Radarwellen durchlässig zu machen.

In den behandelten Flächen bewirkt diese Formfaktoränderung eine dauerhafte lokale Erhöhung der Transparenz, Transluzenz oder Transmission für elektromagnetische Wellen, insbesondere Radarwellen- Radiowellen- und/ oder Lichtwellen, und/ oder eine lokale Reduzierung der Reflektanz, beispielsweise zur Herstellung von unauffälligen metalleffektlackierten Radomen in Wagenfarbe für Radarsensoren (Millimeterwellen).

Die behandelten Flächen dienen auch zur Herstellung von hinterleuchteten Bedienelementen im Cockpit von Fahrzeugen für die Telekommunikationsindustrie zur Herstellung von radiowellentransparenten metalllackierten 5G Transpondern, in der Kosmetikindustrie zur Herstellung von feingravierten transparenten Symbolen auf Edelverpackungen oder zur Herstellung von unauffälligen Mikromarkierungen als Sicherheits-, Kopierschutz-, Ursprungs- oder Echtheitsgarantien von Gegenstände, beispielsweise Banknoten, u.v.m..

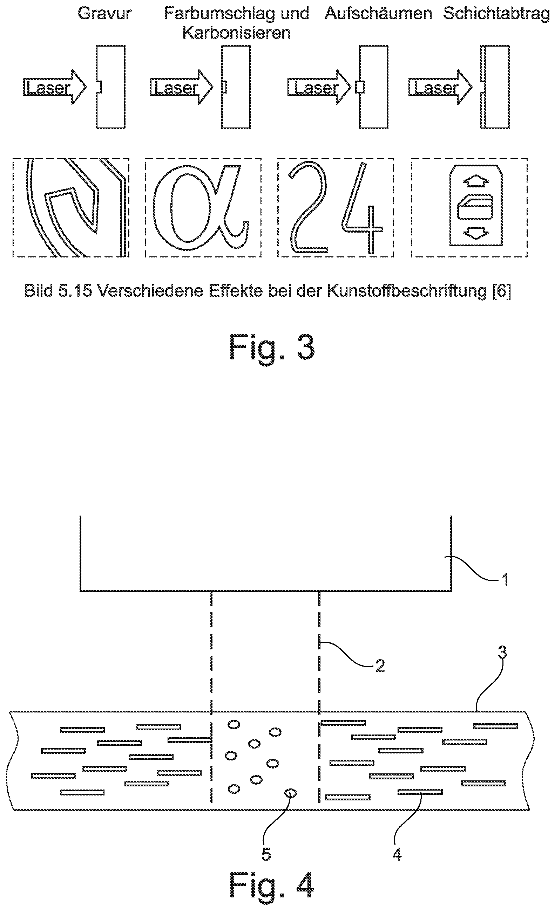

Eine vorteilhafte Implementierung des Verfahrens mit einer herkömmlichen zur Lasermarkierung geeigneten Lasereinheit 1, beispielsweise Nd-YAG Lasereinheit, zur Erzeugung des Hitzeeintrages wird in Fig. 4 dargestellt.

Die Lasereinheit 1 erzeugt einen Laserstrahl 2, der eine dielektrische Matrix 3, bestrahlt und relativ hierzu bewegt/ gescannt werden kann. Beispielsweise kann die Matrix 3 eine Laserlichtdurchlässige Basislackschicht eines metallisierten Autolacks sein, oder das Material eines Kosmetikbehälters, vorzugsweise aus transparentem oder transluzentem Polypropylen oder Polyethylen.

Erfindungswesentlich enthält die Matrix 3 Metalleffektpigmentplättchen 4 mit so dünnen Metallkernen oder Metallschichten im intakten Zustand, dass sie bevorzugt teilweise Laserlichtdurchlässig sind.

Vorzugsweise können hierfür Pigmente auf Basis von Vakuum Metallisierten Plättchen (VMP) mit einer dünnen Metallschicht oder Metallkern unter 40 nm Dicke verwendet werden, weiter vorzugsweise unter 30 nm Dicke, und noch vorteilhafter zur besseren Wandelbarkeit unter 20 nm Dicke.

Diese Pigmente können weitere Schichten aufweisen, vorzugsweise Laserlichttransparente Schichten, beispielsweise Schutzschichten aus Alumina oder Silica, dickere Interferenzschichten, beispielsweise aus Eisenoxid oder Chalcogeniden, und/ oder Schichten, die das Haftung- oder Bindevermögen der Plättchen mit der Matrix verbessern sollen, beispielsweise aus Silanen, vorzugsweise aus Alkylsilan.

Es hat sich aber gezeigt, dass weitere Schichten für das Verfahren nicht unbedingt erforderlich sind.

Durch den Hitzeeintrag des Laserstrahls 2 in die laserlichtdurchlässigen Metallschichten oder Metallkerne der Pigmentplättchen schmelzen die Metallbestandteile des Pigments auf und ziehen sich in flüssigem Zustand zusammen, vermutlich dank der hohen Oberflächenspannung. Vermutlich wegen dieser Oberflächenspannung erstarren die mehr oder weniger kugelförmigen Überreste 5 der Plättchen 4 in viel kompakterer Form als die ursprünglichen Plättchen, die im Unterschied zur Problemdarstellung in Fig. 1 vergleichsweise kaum mehr Deckvermögen und Streukapazitäten miteinander aufweisen, und deswegen Licht- und Mikrowellen kaum mehr reflektieren, weil sich die pigmenthaltige Matrix im gelaserten Bereich weniger wie ein Metallspiegel und mehr wie ein durchlässiges Dielektrikum verhält.

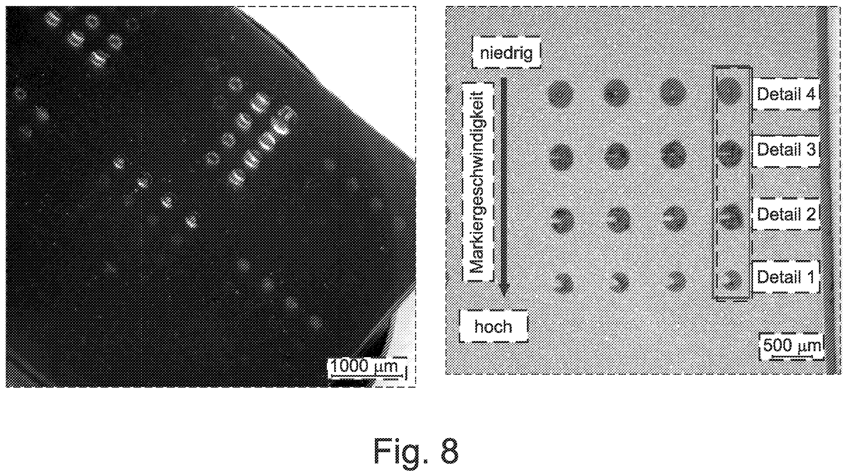

Die in Fig. 8 gezeigte Vergrößerung eines erfindungsgemäß gelaserten Bereiches zeigt, dass die silbrigen/spiegelnden Pigmente zwar noch intakt außerhalb des Bereiches erscheinen, aber im behandelten Bereich wie verschwunden erscheinen, und zwar im rechten Bild auch unterhalb der Oberfläche, weil sie durch das erfindungsgemäße Verfahren nahezu kugelförmig sind und ihr Deckvermögen fast vollständig verloren haben.

Nd-YAG Nahinfrarot (NIR) Laserstrahlung bei 1064 nm hat sich für das Verfahren als besonders vorteilhaft erwiesen, weil die Absorption A = 1 - R - T des Laserlichts durch die dünne Metallschicht bei dieser Wellenlänge besonders hoch ist. Bei bestimmten gefärbten oder NIR absorbierenden Matrixmaterialien oder bestimmten NIR absorbierenden Pigmentbeschichtungen, die diese Wellenlänge zu stark absorbieren würden, erweisen sich jedoch auch frequenzverdoppelte (532 nm, grüner Laserstrahl) oder frequenzverdreifachte (355 nm, UV Laserstrahl) in Spezialfälle als vorteilhafter, weil die erfindungswesentlichen dünnen Metallschichten der Pigmente bei dieser kürzeren Wellenlänge die Laserstrahlenergie fast genauso gut absorbieren können. Als weitere Form des Energieeintrags könnte auch ein Faserlaser (z.B. kurzgepulst, Q-Switch) oder eine Blitzröhre (z.B. Xenon) eingesetzt werden.

Als Matrixmaterialien können u.a. folgende Materialien eingesetzt werden: ABS - Acrylonitrile butadiene styrene, ASA, PS, San - Styrene polymers, Duroplasts, Fluor polymers, PA - Polyamide, PBT - Polybutylene terephthalate, PC - Polycarbonate, PE - Polyethylene, PET - Polyethylene terephthalate, PETG - Polyethylene terepthalate, PMMA - Polymethyl methacrylate, POM - Polyacetal, PP - Polypropylene, Silicone, TPE - Thermoplastic elastomers, TPU - Thermoplastic elastomers.

Abhängig von der chemischen Zusammensetzung des Pigmentaufbaus und von den chemischen Eigenschaften der Matrixbestandteile kommt es bei dem Verfahren zusätzlich zu exothermen chemischen Reaktionen. Beispielsweise zersetzt sich der Füllstoff Calciumcarbonat unter Laserbestrahlung und gibt Kohlendioxid ab und reagiert vorteilhaft mit dem flüssigen Metall. Die Entstehung von diesen von der Laserbestrahlung indirekt ausgelösten chemischen Reaktionen sind zwar nicht zwingend notwendig, um die Aufgaben der Erfindung vorteilhaft zu lösen, sind aber je nach Aufbau der Pigmente für das erfindungsgemäße Verfahren besonders vorteilhaft, weil der Laserstrahl unter Umständen nicht so stark sein muss, und aus diesem Grund die Matrix weniger negativ beeinflusst, da ein Teil der Schmelzenergie von der Reaktion geliefert wird. Die von diesen Reaktionen erzeugten Temperaturen können dann vorteilhaft weitere hitzebeständigere Pigmentbestandteile, wie beispielsweise Schutzschichten aus Silica oder Interferenzschichten aus Eisenoxid ebenfalls verflüssigen.

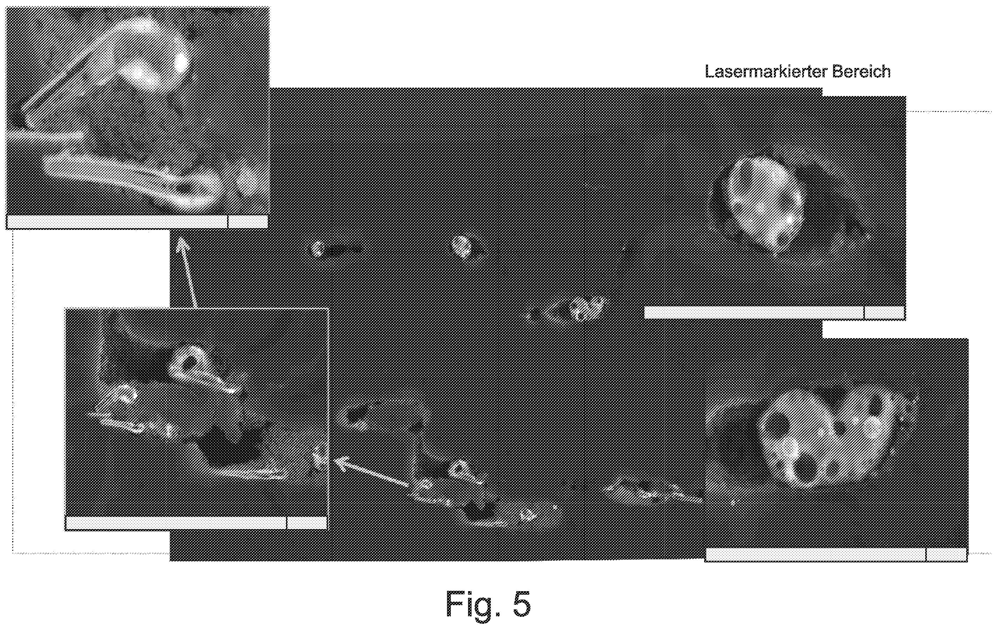

Es wurde überraschend beobachtet, dass sich deren flüssige Überreste ebenfalls wegen der Oberflächenspannung kompakt zusammenziehen und erwünschte Thermitreaktionen auslösen können, die restlos die reflektierenden Metallbestandteile der Metalleffektpigmente in transparente Oxyde wie Alumina verwandeln. Die abgebildeten Details auf der rechten Seite der Fig.5 zeigen, dass sich durch das erfindungsgemäße Verfahren alle Schichten eines Pigments in einem kompakteren bläschenhaltigen Magma vermischen und zusammen reagieren können.

Fig. 5 zeigt einen vergrößerten Querschnitt eines erfindungsgemäß behandelten Basislacks eines Fahrzeugs mit verwandelten mehrschichtigen Pigmenten mit dünnem Aluminiumkern. Auf der linken Seite der Fig. 5 sind nur teilverwandelte Pigmente im Querschnitt sichtbar, die deren ursprünglichen Schichtaufbau erahnen lassen.

Darunter befinden sich auch besonders hitzebeständige Schutzschichten aus Siliziumdioxid, die durch das erfindungsgemäße Verfahren aufgeschmolzen wurden, und in einer Thermitreaktion mit dem dünnen Aluminiumkern chemisch reagiert haben.

Um eine schwer zündbare Thermitreaktion mit dem verflüssigten Aluminium auslösen zu können, sind sehr hohe Temperaturen notwendig.

Eine Röntgenstrahlenanalyse der magmaähnlich wiedererstarrten Pigmentreste hat überraschend gezeigt, dass sich nennenswerte Mengen an Calciumatomen ebenfalls in diesem Magma befinden, als ob sie mitreagiert hätten. Da die Pigmente ursprünglich kein Calcium enthielten, wird stark vermutet, dass die Calciumatome Bestandteile von herkömmlichen Füllstoffen der Kunststoffmatrix gewesen sind, und dass diese Füllstoffe möglicherweise mit den Bestandteilen des Pigments (hauptsächlich dem dünnen Aluminiumkern, mit Silica umhüllt) chemisch reagiert haben, zumal einer der meistverwendeten Füllstoffe, Calcium Carbonat/Calcit/Kreide ist und sich bekanntlich unter Laserlicht in Branntkalk und Kohlendioxid zersetzt.

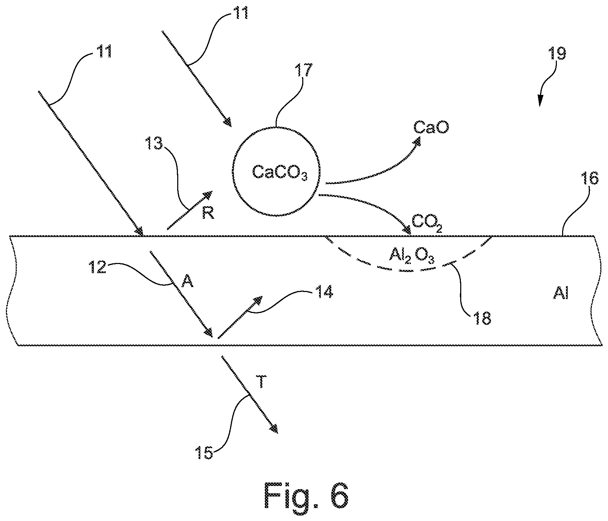

Obwohl die genauen möglichen chemischen Interaktionen noch nicht abschließend geklärt sind, wird in Fig. 6 gezeigt, wie die Füllstoffe bei einer Ausführung zur Entstehung von sehr hohen Reaktionstemperaturen mit den Pigmenten beigetragen können.

Kern ist aber die Erkenntnis, dass durch die Wahl eines geeigneten Energieeintrags der Metallkern aufgeschmolzen wird und durch die Oberflächenspannung eine Formfaktoränderung des Pigments/ Partikels bewirkt wird. Weder die Beschichtung des Pigmentes, noch zusätzliche Füllstoffe in dem Lack bzw. der Matrix sind für das Verfahren eine Voraussetzung und gemäß einiger Ausführungen sogar nicht vorgesehen/ erwünscht, um beispielsweise das Aufschäumen des Pigmentrestes durch intrinsische chemische Reaktionen zu vermindern.

Durch die selektive Umwandlung der Pigmente in einem (Teil)Bereich (Muster) des Karosserieteils und Beibehaltung der unveränderten Pigmente in einem anderen (Teil)Bereich, ist es möglich, einen radardurchlässigen Bereich in einem Lack bereitzustellen und gleichzeitig designtechnisch flexibel zu sein und von teilweiser Transparenz im sichtbaren Bereich bis hin zu einer optisch nicht sichtbaren Strukturierung alles zu ermöglichen. Es findet also nach einer bevorzugten Ausführung der Erfindung durch eine Bemusterung/Strukturierung (durch den Energieeintrag in selektive Bereiche des Karosserieteils - beispielsweise durch selektives Laserscannen oder durch Anwendung einer Maske) eine Entkopplung zwischen einer gewünschten Transparenz für Radarwellen und einer Transparenz im sichtbaren Bereich für optisch sichtbare Effekte (Design) statt.

Eine lichtdurchlässige Matrix 19 enthält Pigmentplättchen mit dünnen Metallschichten oder Metallkernen 16. Gegebenenfalls enthält die Matrix 19 herkömmliche hitzeempfindliche Füllstoffpartikel 17, beispielsweise CaCO₃ (Calcit/Kreide/Calciumcarbonat), die sich statistisch gesehen neben einem Metallkern befinden können. Die Verwendung von CaCO₃ in Kunststoffen u. A. zur Verbesserung der Lasermarkierbarkeit ist an sich bekannt. Beispielsweise offenbart US5075195 aus dem Jahr 1991 eine Lasermarkierung auf Basis von Aluminiumeffektpigmenten (mit einer Metalloxid-Schutzschicht auf einem Metallkern) in einer Polypropylenmatrix unter Verwendung von Kreide/Calcit (=CaCOs) als Füllstoff.

Erfindungsgemäß wird ein Laserstrahl 11 durch die Matrix gestrahlt, um die dünnen Metallschichten oder Metallkerne 16, die ja zum Teil transparent sind, durch Teilabsorption A der Energie des Laserstrahls zu verflüssigen, wobei der absorbierte Energieanteil A des Strahls sich als Differenz der auf dem Plättchen ankommende Energie und dem reflektierten (R) und transmittierten (T) Energieanteil berechnen lässt A= 1- R - T.

Es wird vermutet, dass die Oberflächenspannung des flüssigen Metalls eine drastische Formfaktoränderung des Pigments erzwingt, indem das verflüssigte Metall sich als kugelförmiges Tröpfchen zusammenzieht. Nach Abkühlung und Erstarren dieses Metalltröpfchens wird viel weniger Fläche abgedeckt, als durch den ursprünglichen Kern. Durch dieses drastisch verringerte Deckvermögen der wiedererstarrten Überreste des ursprünglichen Metallkerns der Pigmentplättchen im Laserbestrahlten Bereich entsteht nicht nur eine erhöhte Transparenz oder Transluzenz, sondern auch eine wesentlich verbesserte Transmission für Mikrowellen, durch eine Reduzierung der durch Plättchenüberlappung verursachten Streukapazitäten.

Falls sich ein thermisch zersetzbarer Füllstoffpartikel 17 in der Nähe des Pigments befindet, wird außerdem vermutet, dass das verflüssigte Metall mit den Zersetzungsprodukten der Füllstoffpartikel exotherm reagiert, und sich zumindest zum Teil in transparente und dielektrische Metalloxyde verwandelt, die die Transparenz der bestrahlten Bereiche noch weiter erhöhen. Beispielsweise werden oft in Basislacken und Masterbatches sehr fein gemahlene Calciumcarbonat Partikel als Füllstoff eingesetzt. Unter Laserlicht wird das grundsätzlich thermisch instabile Calciumcarbonat in Branntkalk und Kohlendioxid zersetzt. Letzteres reagiert dann mit der Oberfläche 18 des flüssigen Metalls stark exotherm, wobei ein semitransparenter Metall/Metalloxydschwamm mit CO Gasbläschen entsteht, wie in Fig.5 oben rechts ersichtlich ist, und wie in der Dissertation von D.C. Curran ("Aluminium Foam Production using Calcium Carbonate as a Foaming Agent" Universität Cambridge, 2004) unter "Foaming mechanisms", Seite 173, erklärt wird.

Die in den schwammartigen Pigmentüberresten enthaltenen Gasbläschen sind aufgrund der Reaktionsdynamik von einem 40-100 nm dicken (und transparenten) Metalloxydfilm umgeben.

Diese Aluminium-Kohlendioxid Reaktion 2 Al + 3 CO₂ ==> Al2O₃ +3 CO, die beispielsweise in Raketenantrieben für Mars-Raumschiffe eingesetzt werden kann (Rossi et al "Combustion of Aluminum Particles in Carbon Dioxide", Combustion Science and Technology Band164, Seiten 209-237, 2001), ist dafür bekannt, sehr hohe Temperaturen (>3000°C), insbesondere mit flüssigem Aluminium-Metall zu erzeugen. Eine so hohe Temperatur wäre wohl ausreichend, um zwischen einer Schutzschicht aus Siliziumdioxid und dem Aluminiumkern eine Thermitreaktion zu zünden, die dann wohl den Rest des Aluminium-Metalls in transparentes Aluminiumdioxid umwandelt.

Falls der Kern des Metalleffektpigments alternativ oder zusätzlich von weiteren Schichten umgeben ist, beispielsweise hochrefraktierende Chalkogenidschichten wie Eisenoxid, um Interferenzfarbeffekte zu erzielen, können die von der Calcitzersetzung befeuerte Aluminium-Kohlendioxid Reaktion ebenfalls zur Zündung einer Thermitreaktion zwischen Aluminiumkern und den Chalkogenidschichten führen, wodurch sich der dünne Aluminiumkern vollständig in transparente Oxide verwandelt, was die Interferenzfarbeffekte im Laserbestrahlten Bereich dauerhaft ändert und zu einer noch besseren Radarwellentransparenz führt.

Im Stand der Technik besteht ein weit verbreitetes technisches und sicherheitstechnisches Vorurteil bei Metalleffekt-Pigmentherstellern, wonach Thermitreaktionen eine Brandgefahr darstellen und immer ein gravierender Nachteil sind, der unbedingt unterdrückt werden muss.

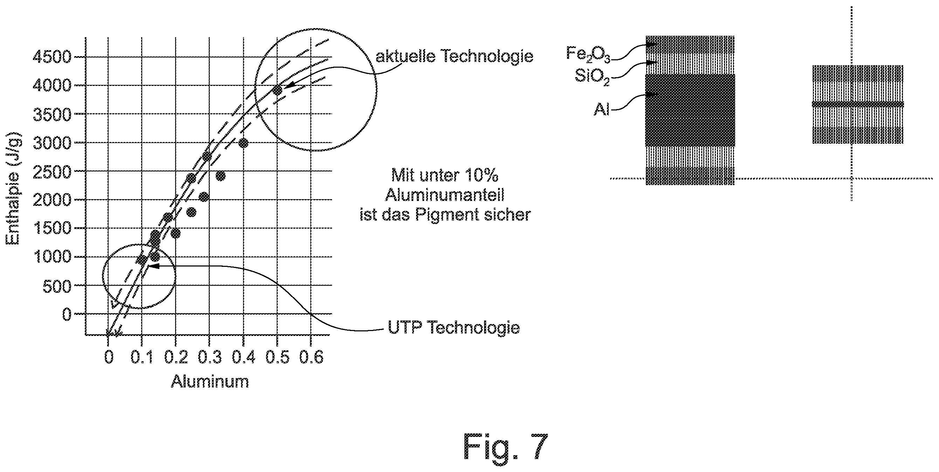

Wie in der Grafik der Fig. 7 quantitativ gezeigt, ist die freie Enthalpie der Pigmente mit erfindungsgemäß dünnem Kern, vorzugsweise VMP Kern so gering, dass kaum mehr Brandgefahr besteht, und das Pigment ohne besondere Brandsicherheitsauflagen sicherer trocken gelagert und transportieren werden kann.

Die für die Erfindung bevorzugten UTP (Ultra Thin Pigments) mit ggf. Chalkogenid-Interferenzschichten (beispielsweise aus Fe₂O₃) weisen einen VMP Aluminiumkern auf, der auch im Fall eines absichtlich (durch Lasermarkierung gemäß Erfindung) oder unabsichtlich ausgelösten Thermitreaktion eine viel bessere Brandsicherheit ermöglicht, als die wegen dem dickeren Aluminiumkern stark Thermitreaktions gefährdeten klassischen Interferenzpigmente, die deswegen aus Sicherheitsgründen stöchiometrisch farblimitiert werden müssen. Diese geringere Gefahr der UTPs ermöglicht eine breitere Interferenzfarbpalette, die auch noch besser und günstiger mittels Laser transparent und/ oder Mikrowellen-durchlässig markiert werden kann.

Die vorliegende Erfindung betrifft auch die Erzeugnisse des Verfahrens, z. B. mit Metalleffektpigmenten lackierte Gegenstände, wie Kunststoffkarosserieteile, die für Radarwellen durchlässiger gemacht worden sind, Gegenstände wie Kosmetik Flaschen, Banknoten oder Kfz-Bedienelemente, die nachträglich mit transparenten, transluzenten oder hinterbeleuchtbaren Symbolen (in spiegelähnlicher Beschichtung radiowellen- und/ oder lichtwellendurchlässig beschriftet oder mikrobeschriftet sind.

Ebenso betrifft die vorliegende Erfindung die Verwendung der für das Verfahren geeigneten Metalleffektpigmente, Interferenz-Metalleffektpigmente, metallhaltige Partikel, sowie Druckfarben, Lacke, Masterbatches und Gegenstände, die solche geeignete Partikel, bzw. Pigmente beinhalten und für Anwendung des Verfahrens optimiert sind. Optimiert auch zum Beispiel durch den Einsatz von geeigneten laserempfindlichen Füllstoffen, die eine chemische Reaktion oder physische Verformung des Metallanteils der Pigmente oder metallhaltigen Partikel begünstigen.

Das Verfahren unterscheidet sich von der herkömmlichen Lasermarkierung, indem die Transmission für elektromagnetische Wellen von normalerweise reflektierenden Metalleffektpigmentflächen durch das vom Laserstrahl verursachte Pigmentschrumpfen dauerhaft erhöht wird, wobei die Pigmentplättchen entweder durch direkte Schmelzung und/ oder durch das Auslösen einer chemischen Hilfsreaktion so verändert werden, dass deren Metallkern zumindest zum Teil aufgeschmolzen, chemisch verwandelt und/ oder zerstört wird. Die behandelten Flächen können dadurch transparenter oder transluzenter werden.

Zum Vergleich zeigt Fig. 3 (Stand der Technik), aus dem Buch Oberflächentechnik von Dr. Feist, worauf die herkömmlichen Lasermarkierungsverfahren zielen.

Diese Verfahren sind zwar seit Jahrzehnten dafür bekannt, dass sie Pigmentlacke in der Tiefe markieren können (und zwar durch lokale Verkohlung, Vergasung oder chemische Veränderung der Matrix des Basislacks), ohne eine davorstehende Klarlackschicht oder Kunststoffschicht zu beschädigen; bisher ist aber kein Lasermarkierungsverfahren bekannt, dessen Sinn und Zweck die physische oder chemische Änderung der Metalleffektpigmente selbst ist, damit sie die Mikrowellenstrahlung nicht mehr stören, ohne die Schutzwirkung und/ oder optische Eigenschaften des Lacks zu sehr zu beeinträchtigen.

Bei den aus dem Stand der Technik bekannten Verfahren (Gravur, Farbumschlag und Karbonisieren, Aufschäumen und Schichtabtrag entsteht im Unterschied zur vorliegenden Erfindung keine physische oder chemische Pigmentverwandlung, vielmehr basieren die herkömmlichen Lasermarkierungsverfahren auf der Verwandlung der Polymermatrix. Weder eine Verringerung des Deckvermögens der individuellen Pigmente noch eine Erhöhung der Transmission in Bezug auf elektromagnetische Wellen ist Gegenstand der herkömmlichen Lasermarkierungsverfahren.

Um beste Ergebnisse zu erzielen, erfordert das erfindungsgemäße Verfahren allerdings Metalleffektpigmentplättchen oder Interferenz-Metalleffektpigmentplättchen mit dünnen Metallkernen bzw. Schichten, vorzugsweise Vakuum metallisierte Pigmente mit einem Kern aus Metallen mit niedrigem Schmelzpunkt, wie Zinn, Aluminium, Indium, Zinn-Indium-Legierung, Zink, Blei, Ag, Cu, usw.

Weiter vorzugsweise kann der Kern so dünn sein, dass er für das Laserlicht teiltransparent ist, damit die Energie des Laserstrahls im Inneren des Kerns auch z. T. durch multiple Reflexionen optimal absorbiert werden kann, wobei die Metallmenge, die verformt oder verwandelt werden muss, ausreichend gering bleibt. In jedem Fall muss der Kern so dünn sein, dass die eingebrachte Energie ausreicht, den Kern aufzuschmelzen.

Natürlich steht aber für die Auswahl der optimalen Kerndicke vor allem der gewünschte optische Eindruck der metallisierten Lackschicht im Vordergrund: Dünnere Aluminiumkerne reflektieren wenig Licht (niedriger R-Wert in der folgenden Tabelle), und erscheinen deshalb eher dunkel, während dickere (ab etwa 320 Angström / 32 nm Dicke wird über 90% des Lichts reflektiert) heller silbrig-metallisch erscheinen.

In Tabelle IV aus "Optical Constants and Reflectance and Transmittance of Evaporated Aluminum in the Visible and Ultraviolet", Journal of the optical society of America, G. Hass and J.E. Waylonis, July 1961, Vol.51 no.7, Juli 1961

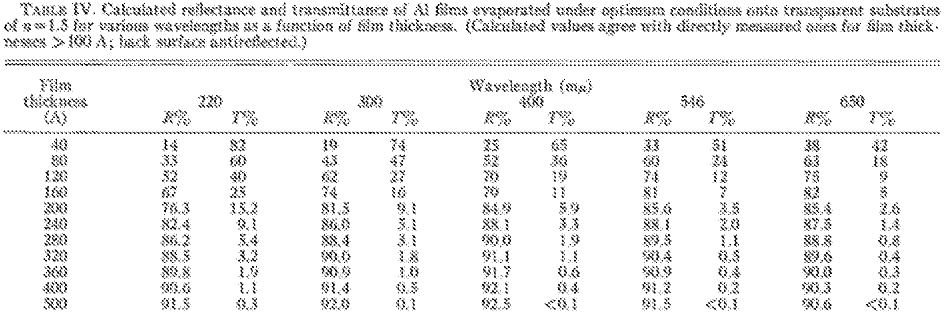

werden Reflektanz und Transmission von dünnen Aluminiumschichten bei verschiedenen Wellenlängen angegeben. Zwar wurde die Lichtabsorption, die für die Quantifizierung der Erwärmung des Kerns durch einen Laserstrahl wichtig ist, in der Tabelle nicht explizit angegeben, die Absorption einer dünnen Aluminiumschicht oder Kerns kann aber aus der Tabelle mit dem Formel A= 1-R-T ermittelt werden. In dem Dickenbereich 8 bis 32 nm liegt sie relativ günstig bei 10% oder höher. In dem Dickenbereich 8-16 nm liegt die Absorption je nach Wellenlänge am günstigsten, z. T bei über 15%, was für eine relativ kräftige Erhitzung des Aluminiumkerns mit relativ wenig Laserenergie sorgt.

Aluminiumkerne sind zum Beispiel für das Licht eines Nd-YAG Lasers (1064 nm, frequenzverdoppelt bei 532 nm oder frequenzverdreifacht bei 355nm) bis etwa 40 nm Dicke (>0,2% Transmission bei 40 nm Dicke gemäß Tabelle) teiltransparent, und sind am besten geeignet, bei einer Dicke von 8 bis 32 nm, bevorzugt 10 bis 20 nm, Laserlicht zu absorbieren, und sind in diesem Dickenbereich für das Verfahren der vorliegenden Erfindung besonders gut geeignet.

Bei Aluminiumkernen über 40nm Dicke wird zwar noch fast unverändert 10% der Laserenergie absorbiert, es liegt aber auf der Hand, dass der voluminöse Kern sich mit der gleichen absorbierten Energie weniger rasch erwärmt, so dass etwaige physikalische Schmelzeffekte oder etwaige chemische Reaktionen bei dickeren Kerne weniger begünstigt werden. Auch bei dickeren Kernen spielen multiple Reflexionen des Laserstrahls innerhalb des Pigments für die Gesamterhitzung eher weniger eine Rolle, als bei dünneren Kernen.

Aus diesen Gründen wird vermutet, und durchgeführte Experimente haben bestätigt, dass dickere Kerne für das Verfahren der Erfindung weniger geeignet sind, weil sie das Laserlicht verlustarmer zurück in die Matrix reflektieren und sich auch wegen des größeren Volumens sowieso weniger schnell erhitzen.

Bei der erfindungsgemäß gewünschten Auslösung einer exothermen chemischen Reaktion im Pigment, wie beispielsweise einer Thermitreaktion (zum Beispiel durch Laserzündung eines Interferenz-Metallpigmentes mit Aluminiumkern und Eisenoxidbeschichtung), würden dickere Metallkerne wegen der größeren Metallmenge auch heftiger und gefährlicher reagieren, wodurch eine erhöhte Brandgefahr entsteht. Bei den dünnen Aluminiumkernen propagiert sich eine gezündete Thermitreaktion nicht mehr unkontrollierbar von Pigment zu Pigment.

Nach bisherigen sicherheitstechnischen Vorurteilen zur Brandgefahr bei Pigmenten auf Basis von Aluminium Nanopartikeln sind diese als potentielles Gefahrgut einzustufen, insbesondere, wenn sie mit bestimmten Metalloxiden wie Eisenoxid oder Titaniumoxid in stöchiometrischen Mengen in Kontakt kommen (als Nachweis dieser Vorurteile, siehe insbesondere WO2005/049739 zu Eckart, wonach die realisierbare Farbpalette wegen Brandgefahr begrenzt sei und Schlenk EP3283573B1, wonach die Thermitreaktion bei einem bestimmten Verhältnis von Alu zum Rest unterdrückt werden kann. Diese Begrenzungen gelten bei dünnen Aluminiumkernen nicht mehr. Damit sind die für das erfindungsgemäße Verfahren geeigneten Interferenz-Metalleffektpigmente mit dünnem Kern in mindestens zweierlei Hinsicht vorteilhafter: Wesentlich breitere Farbpalette und hohe Brandsicherheit, siehe hierzu Fig. 5.

Es werden zwar eine Reihe von möglichen physikalischen und chemischen Erklärungen für die Entstehung der Transparenz durch Laserbestrahlung bei verschiedenen Pigmentaufbautypen vermutet, es ist aber noch nicht abschließend geklärt, welche die wichtigsten sind.

Bei Pigmenten, die nur aus dünnem Aluminium-Metall bestehen, ggf. mit noch dünneren Schutzschichten, wird u. A. vermutet, dass die durch den Laser erwärmten Pigmente entweder einfach aufgeschmolzen werden (Al-Schmelzpunkt 660°C) und wegen Oberflächenspannung des flüssigen Aluminiums ihren sehr flachen Formfaktor im Wesentlichen verlieren und ungefähr kugelförmig wieder erstarren, wie in Fig. 4 schematisch gezeigt oder mit laserlichtempfindlichen Füllstoffen der Kunststoffmatrix (Calcite/Kreide CaCOs) gemäß der in Fig. 5 dargestellten Reaktion bei etwa 800°C chemisch reagieren, und als Aluminium/Alumina/Branntkalk/CO₂/CO schwammförmig und nahezu kugelig wieder erstarren, wie auf der rechten Seite der Fig. 6 dargestellt ist, wobei Aluminium zumindest zum Teil in Alumina verwandelt wird. In einer verbesserten Ausführung wird MgCO₃ /Dolomit als Füllstoff in einer Lackschicht/ Kunststoff anstelle von Calcite/ Kreide vorgeschlagen.

Die drastische Verbesserung der Licht- und Mikrowellentransmission der behandelten Fläche entsteht daher nicht nur wegen der in Fig. 4 suggerierten und in Fig. 8 experimentell sichtbaren Verkleinerung des Deckvermögens der Metalleffektpigmente (in dem behandelten Bereich der Fig. 8 sind die meisten Pigmente derart geschrumpft, dass nur noch einige überhaupt sichtbar sind), sondern auch, weil Alumina als Reaktionsprodukt der Verwandlung des Kerns grundsätzlich lichttransparent ist, weil Branntkalk weiß erscheint, und weil diese Reaktionsprodukte Mikrowellen nicht mehr reflektieren können. Einerseits weil sie nicht mehr elektrisch leitend sind, und andererseits, weil ohne elektrisch leitende Plättchen-Bestandteile das in Fig. 1 schematisch erklärte Phänomen der Grenzpolarisation nicht mehr existieren kann, wodurch auch die für Mikrowellentransmission ungünstige Streukapazitätseffekte fast gänzlich verschwunden sind.

Auf der linken Seite von Fig. 5 wird ein zum Teil geschmolzenes Pigment gezeigt, das scheinbar keine Merkmale einer chemischen Reaktion aufweist (kaum Durchmischung der Schichten).

Auf der rechten Seite von Fig. 5 wird hingegen ein offensichtlich geschäumter Pigmentrest gezeigt, der wie ein Schwamm mehrere Gasbläschen aufweist, als ob das Aluminium mit einem bekannten, oft verwendeten Kunststoff-Füllstoff als Aufschlagmittel wie Calcium Carbonat reagiert hätte. Eine solche Aluminiumschaum Reaktion wird u. A. in "production of aluminium foam and the effect of calcium carbonate as a foaming agent" von Aboraia et al, Journal of Engineering Sciences, Vol.39 no.2, März 2011 beschrieben, sowie in der Doktorarbeit von D.C. Curran in the University of Cambridge in 2004: "Aluminium foam production using calcium carbonate as a foaming agent" https://www.repository.cam.ac.uk/handle/1810/252945; auch im Zusammenhang mit Kohlendioxid siehe insbesondere den Absatz "Foaming mechanisms", Seite 173-174.

Bei den beiden Phänomenen, also physische Schmelzung und/ oder chemische Reaktion, die kompatibel mit den beobachteten experimentellen Ergebnissen sind, schrumpft der Formfaktor des ursprünglichen Pigmentplättchens drastisch, und dadurch verringert sich die durch Pigmentüberlappung verursachte Grenzpolarisation und Streukapazität ebenfalls drastisch.

Als Rechenbeispiel wird ein vakuummetallisiertes Pigment von 8 Mikrometer Durchmesser (entspricht einem Deckvermögen von etwa 50 Quadratmikrometer Fläche) und 12 Nanometer Dicke beschrieben, dessen Metallkern beispielsweise aus Aluminium oder einer Aluminiumlegierung in metallischer Form besteht. Die Reinheit des Metalls ist für die Erfindung relativ unwichtig. Das Pigment wird von einem Laser geschmolzen, und zieht sich in flüssiger Form aufgrund der Oberflächenspannung als Tröpfchen wieder zusammen, wie auch experimentell in dem Bilddetail der Fig. 5 links oben verdeutlicht wird, um dann wieder in quasisphärischer Form zu erstarren. Dessen Volumen ist sowohl in ursprünglicher Plattenform als auch in Tröpfchenform unverändert 0,603 Kubikmikrometer, was einer Kugel von etwa 1,04 Mikrometer Durchmesser entspricht, mit einem von nur 0,85 Quadratmikrometern.

Das Deckvermögen eines derart behandelten Pigments ist also etwa 60-mal kleiner, als das des ursprünglichen Pigments. Deswegen sind die Pigmentüberlappungen in vom Laser behandelten Bereich für Radarwellen nun weitaus geringer, bzw. es kommt kaum mehr zu Überlappungen zwischen den zusammengeschrumpften Pigmentresten. Im Übrigen wäre durch das um einen Faktor von 60 reduzierte Deckvermögen die Transparenz des Pigments viel höher, weil die nun stark geschrumpften Pigmentflächen den Hintergrund kaum noch decken. Dieser Transparenzeffekt wird auch noch durch zwei weitere Phänomene verstärkt: Erstens entstehen nennenswertere Transluzenzeffekte durch stärkere Streuung um das kleinere Partikel; und zweitens entstehen bei einer etwaigen chemischen Reaktion des Metallkerns im flüssigen Zustand mit seiner Umgebung (meist eine Oxidation) i. d. R. transparentere Reaktionsprodukte, die die Kernüberreste lichtdurchlässiger machen.

Eine Beschreibung der abgebildeten Details in Fig. 5 rechts, wobei mehrere Gasbläschen innerhalb der ansonsten weitgehend homogen erscheinenden Magma der Pigmentüberreste nach Laserbestrahlung entstanden sind, begründet mehrere Annahmen und Schlussfolgerungen über den Verlauf der Pigmentverwandlung. Erstens wurden wohl sehr hohe Temperaturen erreicht, weil auch das lasertransparente Siliziumdioxid (Schmelzpunkt 1710°C) der Schutzhülle komplett aufgeschmolzen ist.

Zweitens lassen sich die Gasbläschen innerhalb der Pigmentüberreste wohl nur erklären, wenn nicht nur eine rein physische Aufschmelzung stattgefunden hat, sondern eine chemische Reaktion, die ein Gas erzeugt hat, und zwar in nennenswerten Mengen. Da die Pigment-Hauptbestandteile (Aluminium und Siliziumdioxid) nur als Thermitreaktion miteinander reagieren können, und da eine solche Reaktion kein Gas generieren kann, dürften die beobachteten Gasbläschen als wichtiger Nachweis gesehen werden, dass stattdessen oder zusätzlich eine weitere chemische Reaktion stattgefunden hat, die im Verlauf der Reaktion fähig gewesen ist, viele Gasbläschen im Inneren der Pigmentüberreste zu erzeugen. Ein gängiger Füllstoff der Kunststoffmatrix wie Calcium Carbonat, der aufgrund seiner temperaturbedingten Zersetzung in Kohlendioxid und Branntkalk als Aufschlagmittel für flüssiges Aluminium bekannt ist, und die Tatsache dass die Verbrennung von flüssigem Aluminium in Kohlendioxid extrem hohe Verbrennungstemperaturen bis 3000°C ermöglicht, die Siliziumdioxid durchaus verflüssigen könnten und eine Thermitreaktion desselben mit Aluminium auslösen könnte erlaubt die Hypothese gemäß Fig. 6, dass Calciumcarbonat als Reagent anzusehen ist, und dass die Bläschen wohl eine Mischung aus unreagiertem Kohlendioxid und Kohlenmonoxid enthalten.

### Testausrüstung, Testproben und Testergebnisse.

Als Nahinfrarot Laserquelle wurde ein herkömmliches rechnergesteuertes Desktop- Laserbeschriftungsgerät mit einem gepulsten Nd-YAG Laser bei 1064 nm mit einer festen 15 KHz Pulsfrequenz verwendet, das mit passender Scaneinheit, Justiereinheit und Probeaufnahme ausgestattet ist.

Die Anlage ermöglicht die Ausgabe von nahezu beliebigen 2D-Mustern auf die Testproben mit veränderlichen Pulsabständen (Pulsabstände von 6 bis 36 Mikrometer sind i. d. R. verwendet worden) und definierten Strahlleistungsabschwächungen ab 6 Watt bis etwa ein Zehntel Watt.

Da die geeigneten Pulsabstände und Pulsstärken weitgehend Pigment- und Matrixabhängig sind, müssen die geeigneten Laserparameter fallabhängig ermittelt werden.

Die Testproben bestehen aus flachen Polypropylenkarten, und wurden mit verschiedenen Metalleffektpigmenten und Interferenz-Metalleffektpigmenten mit erfindungsgemäß dünnen Aluminiumkernen ausgestattet.

Als Testobjekte wurden Polypropylenplatten mit verschiedenen MetalleffektPigmenten in diversen Konzentrationen bereitgestellt, entweder direkt in dem Kunststoff oder in einem aufgetragenen Basislack, wie sie in der Autoindustrie gewöhnlich verwendet werden. Einige der Proben wurden außerdem mit einem Klarlack über dem Basislack ausgestattet, wie es bei Fahrzeuglackierungen üblich ist.

Als Vergleichsbeispiele wurden nicht erfindungsgemäße Pigmente erprobt, etwa Perlglanzpigmente und Metalleffektpigmente mit dickeren Metallkernen, wobei bestätigt wurde, dass der dünne Metallkern für das erfindungsgemäße Verfahren tatsächlich erfindungswesentlich ist.

Bei nicht erfindungsgemäßen Pigmente, wie etwa Perlglanzpigmenten der Firma Kuncai konnten keine Laserparameter gefunden werden, die einen etwaigen Transparenzeffekt herstellten: Es entstanden keine Transparenzeffekte, und bei zu starker Laserbestrahlung auch noch Verbrennungen der Matrix.

Eine Laserung durch den Klarlack zur Erzielung der Transparenz hat sich in den meisten erfindungsgemäßen Proben als schwieriger erwiesen, wohl durch Laserverluste in dem Klarlack. Entsprechend hat dies nur noch zum Teil zu dem gewünschten Transparenzergebnis geführt.

Fig. 8 zeigt, wie für jedes Pigment/ Matrix/ Substratkombination die geeigneten Nd-YAG Laserparameter durch Versuchsfelder mit unterschiedlichen Markiergeschwindigkeiten (Pulsabstände), Laserleistungen und Wartezeiten nach jedem Polygonzug ermittelt wurden.

Als Trajektorie ist eine Anordnung von konzentrischen Ringen gewählt worden. Bei stärkerer Leistung und niedrigerer Markiergeschwindigkeit ist im Bild links in Fig. 8 auf der Testprobe eine helle Aufschäumung der Matrix sichtbar und auch haptisch fühlbar, zusätzlich zur erreichten Transparenz.

Ein solcher zusätzlicher haptischer Effekt kann beispielsweise bei der Herstellung von hinterbeleuchteten gelaserten Symbolen auf Bedienelementen aus Metalleffekt pigmentierten Kunststoffen durchaus vorteilhaft oder wünschenswert sein, unter anderem bei Bedienelementen mit gelaserten Symbolen, die nachts in einem Auto, Boot oder Flugzeugcockpit, einer Computertastatur oder einem Mobiltelefon bedient werden müssen, und die aus Sicherheitsgründen sowohl gesehen als auch haptisch gefühlt werden müssen.

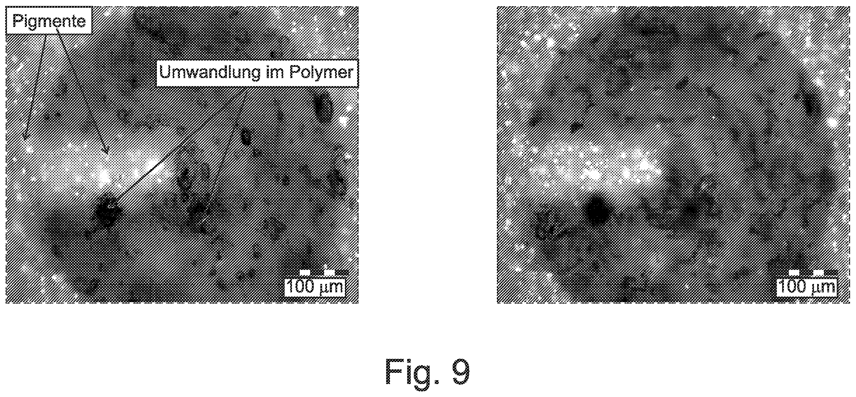

Diese Experimente bestätigten, dass die gelaserten Bereiche bei Verwendung der Metalleffektpigmente mit dünnem Metallkern transparent oder transluzent werden, und dass der spiegelähnliche Effekt in den gelaserten Bereichen zerstört wird. Dies ist insbesondere auf der stark vergrößerten Detailansicht eines Bereiches aus Fig. 8 im Bild rechts auf Fig. 9 deutlich zu sehen, in dem die einzelnen Metalleffektpigmente durch die Vergrößerung sichtbar geworden sind.

Es hat sich gezeigt, dass eine Strahlleistung von 0,25 Watt bei 15 KHz in den meisten Fällen zur Erstellung des erfindungsgemäßen Transparenz-/ Transluzenzeffektes und der entsprechenden Reduzierung der Reflektanz ausreicht.

Bei stärkeren Leistungen können vermehrt Verkohlungen der Matrix entstehen, wie sie in Fig. 9 vereinzelt ersichtlich sind.

Bei gezielter Verwendung von höheren Konzentrationen von Aufschäummitteln (beispielsweise das unter Laserlicht zersetzbare Calciumcarbonat) oder stärkerer Laserbestrahlung kann außerdem dem bestrahlten Bereich ein fühlbarer haptischer Effekt zusätzlich zur lokalen Transparenz verliehen werden.

Die Vergrößerung der Metalleffektpigmentierten Oberfläche des Testobjekts nach der Laserbehandlung, die in Fig. 9 im Bild links mit Fokussierung an der Oberfläche, im Bild rechts unter der Oberfläche zu sehen ist, zeigt, dass in dem laserbehandelten Bereich neben einigen laserbedingten Verkohlungen kaum mehr reflektierende Pigmente sichtbar sind, und auch nicht unter der Oberfläche, da sie aufgrund der Aufschmelzung und Oberflächenspannung des flüssigen Kerns unter Laserstrahlung so zusammengeschrumpft sind, dass deren Deckvermögen praktisch vernichtet wurde.

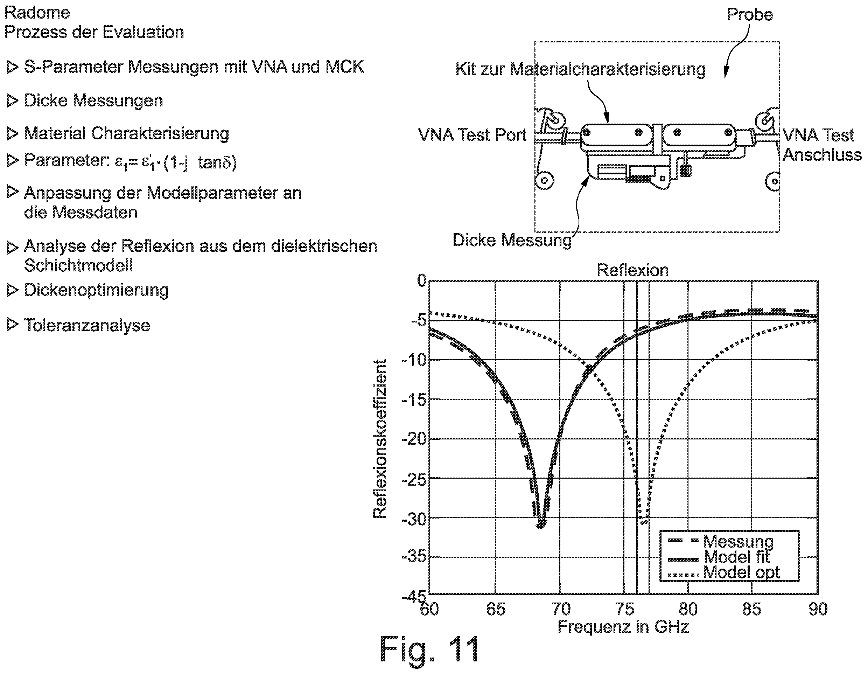

Auch wegen dieses Zusammenschrumpfens der gelaserten Pigmente sind die für Mikrowellentransmission problematischen Pigmentüberlappungen und deren Streukapazitäten praktisch verschwunden, die in unbehandelten Bereichen für einen hohen Reflexionskoeffizienten sorgten. Auch deswegen reflektiert die mit Laser behandelte Fläche weder Licht noch Mikrowellen, wie sich mit der Netzwerkanalyse - Testanordnung gemäß Fig. 11 bestätigen lässt.

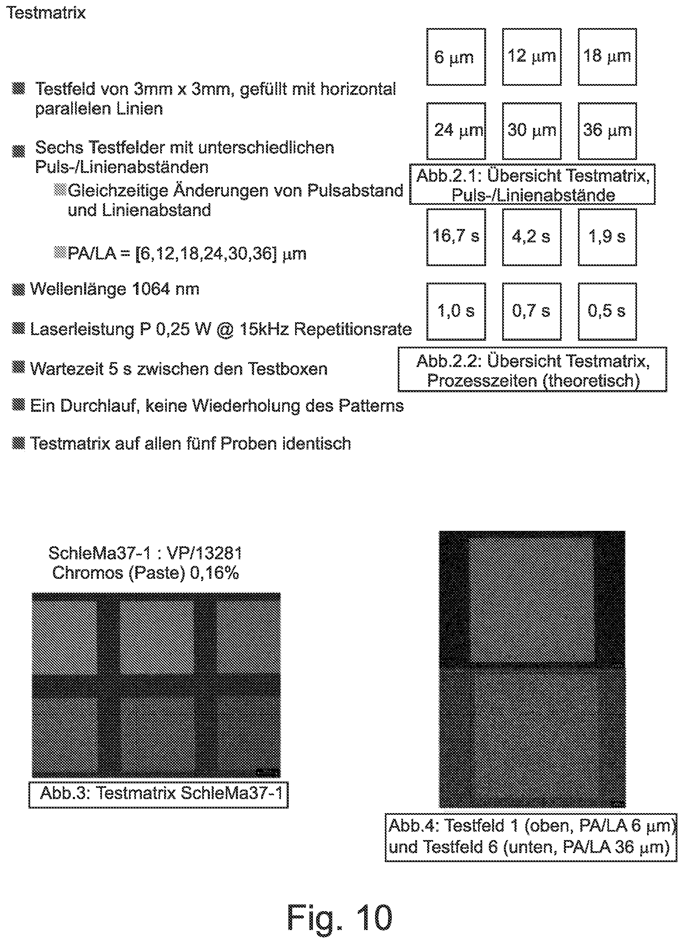

Fig. 10 zeigt die Prinzipien, Parameter und Ergebnisse einer ausgereifteren Versuchs-Testmatrix mit quadratisch gescannten Testfeldern bei 0,25 W Laserleistung bei 15kHz Pulswiederholungsrate sowie einer Wellenlänge von 1064 nm und anhand der Versuchsergebnisse von gemäß Fig. 8 optimierten Laserparametern.

Die Pulsabstände auf den sechs Versuchsfeldern betragen 6, 12, 18, 24, 30 und 36 Mikrometer, wobei die erzielte Transparenz entsprechend abnimmt (die bestrahlten Felder werden mit zunehmendem Laserpulsabstand natürlich dunkler) wobei die Schreibgeschwindigkeit zunimmt; bei 36 Mikrometern werden die Rasterlinien und individuellen Bestrahlungspunkte sichtbar; es wurden fünf Pigmentsorten und Konzentrationen getestet.

Gezeigt werden die Ergebnisse einer niedrigkonzentrierten Probe (Pigment Chromos, Hersteller Schlenk), die besonders dunkel und kaum reflektierend auch in den ungelaserten Bereichen aussieht, weil das Pigment durch einen besonders dünnen metallischen Kern aus Aluminium gekennzeichnet ist, 0,16% Pigmentanteil).

Fünf Proben sind erfolgreich getestet worden, darunter auch ein reines Aluminium Decomet Pigment der Firma Schlenk ohne Siliziumschutzschicht, also ohne Möglichkeit, die zusätzliche Reaktionshitze einer Thermitreaktion zu verwenden. Alle wiesen ähnlichen optischen Transparenzabstufungen auf.

Die Mikrowellen-Reflexionseigenschaften der Testproben wurden mit Hilfe des in Fig. 11 abgebildeten Wellenleiter Materialien Charakterisierungs Kits (MCK) durch Messung des Reflexionskoeffizienten einer Testprobe zwischen zwei Wellenleitern ermittelt, die jeweils mit einem Vektor Netzwerk Analysator (VNA) verbunden wurden.

Bei einer laserbemusterten Lackprobe aus einem erfindungsgemäßen Interferenz-Metalleffektpigment Zenexo Golden Shine (Pigmentaufbau: dünne Aluminium-Metallschicht, dann umhüllende Siliziumdioxid Schutzschicht, dann zumindest eine Interferenzschicht aus Eisenoxid, Interferenzfarbe Gold) verringerte sich der Reflexionskoeffizient erwartungsgemäß von -5dB in ungelasertem Zustand auf -15 dB nach dem Lasern bei einem relativ groben und auffälligen Laserpulsabstand von etwa 0,1 Millimeter.

Aus der Messung der Reflexionskoeffizienten können auch die Transmissionseigenschaften ermittelt werden. -15dB Reflexionskoeffizient (S₁₁) bedeutet, dass nur sehr wenig Mikrowellenenergie von dem laserbehandelten Lack auf dem Testobjekt reflektiert wird, und dass fast die vollständige Radarenergie durch das Testobjekt ungehindert transmittiert wird.

Bei einer Wellenleitermessung kann quantitativ gemessen werden, wie die Laserbehandlung die Durchlässigkeit der lackierten Fläche für Radarwellen verbessert, und wie sehr die unerwünschte Reflexion auf dem Lack durch die Laserbestrahlung unterdrückt wird.

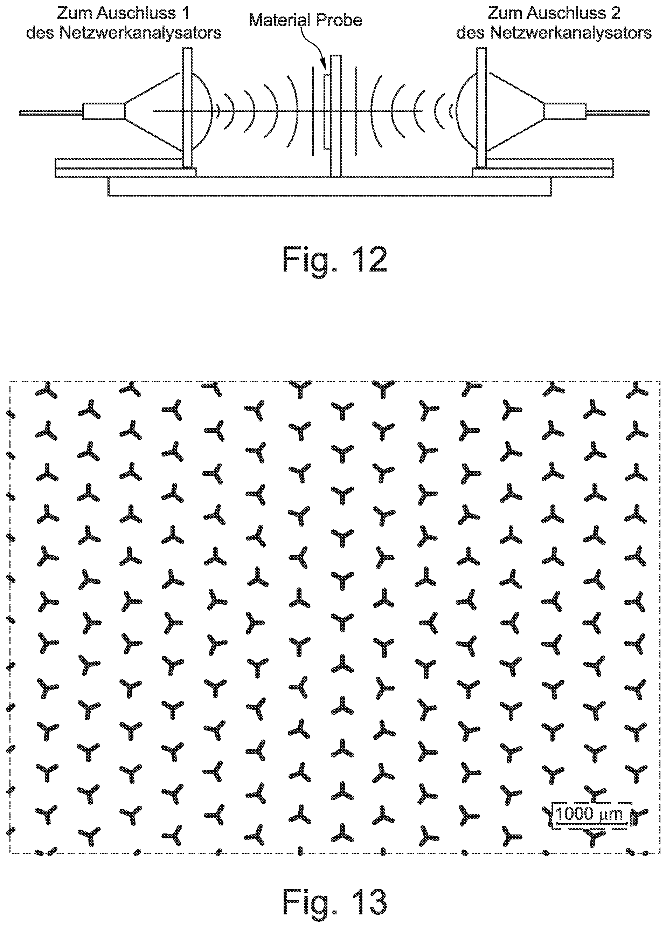

In Fig. 13 wurden die Eigenschaften eines Radom-Schlitzprofils (Y-Schlitzmatrix-Radom, in ein mit Zenexo Golden Shine Pigment lackierten Gegenstand transparent gelasert).

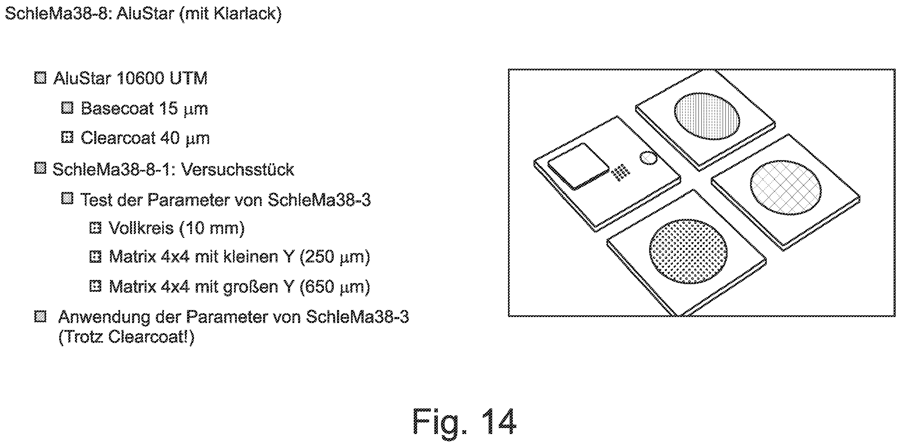

In Fig. 14 wurden die Eigenschaften eines Y-Schlitzmatrix-Radoms, abgebildet, das in ein mit dem silbrigen Pigment Alustar lackierten Gegenstand, durch 40 Mikrometer Klarlack transparent gelasert wurde.

Fig. 12 zeigt die Messung des Freiraum Reflexionskoeffizienten einer Testprobe, beispielsweise eines Metall-lackierten Karosserieteils, mit einem Vektor Netzwerk Analysator (VNA) und einem Free Space Material Charakterization Kit (MCK). Abbildungsquelle: Michel Joussemet "novel devices and Material Characterization at mm-wave and Teraherz", Agilent Technologies, erhältlich in Internet unter https://www.keysight.com/upload/cmc_upload/All/noveldevices.pdf
Die in Fig. 13 und Fig. 14 abgebildeten Y-Schlitz-Radomprofile stammen aus der Lehre der Schlitzantennentheorie, wobei diese Theorie natürlich für Schlitze in homogenen, gut leitenden Metallblechen gilt. Schlitzradome sind natürlich nicht die einzig möglichen Anwendungen der Erfindung im Mikrowellenbereich, Radarbereich oder 5G-Telekommunikationsbereich.

Teil der Erfindung ist auch, Sende- oder Empfangs-Antennen oder Antennenelemente aus gelasertem Metalleffektpigmentlack auf Kunststoff herzustellen, sowie relativ günstig radarabsorbierende Strukturen für Flugkörper herzustellen.

Die gesamten Lehren der Antennentheorie und Radiation absorbierender Strukturen lassen sich insgesamt auf Metalleffektpigmentierte Flächen extrapolieren, insbesondere im Mikrowellenbereich, wenn VMP-Pigmente und eine geeignete, besonders verlustarme dielektrischen Matrix angewendet werden, weil diese Pigmente vom Herstellungsprozess her besonders glatt sind und gute Überlappungseigenschaften haben.

Die in Figur 13 und Figur 14 abgebildeten Y-Schlitz und Vollkreis Radomprofile waren zum Test bei mehreren Effektpigmentlacken gelasert worden und anschließend experimentell unter Millimeterstrahlen (in einem Frequenzbereich um 76 GHz, entspricht 4 mm Wellenlänge) gemessen worden.

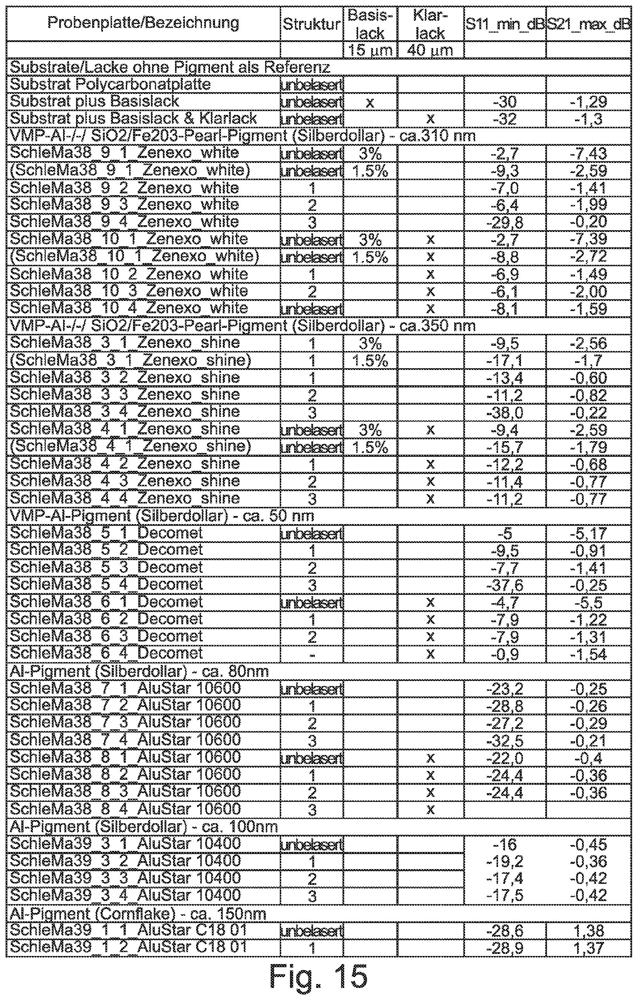

Die Messergebnisse von lackierten Polycarbonatplatten gemäß Fig. 15 erlauben einen Vergleich mit den ungelaserten metalleffektpigmentierten Flächen.

Diese Messergebnisse zeigen, dass bei Pigmenten (Tests 38-1 bis 38-7, Aluminiumdicke bis 80 nm), die Laserungen beachtliche Effekte bei der Reflektion und Transmission von Millimeterwellen bewirken. Insbesondere bei Struktur 3 (gelaserter Vollkreis), wobei die Testergebnisse fast so gut sind, wie bei Polycarbonatplatten ohne Pigmente.

Weitere wichtige Aspekte der Erfindung lassen sich folgendermaßen formulieren: Gegenstand der Erfindung ist ein Verfahren zur dauerhaften Erhöhung der Transparenz, Transluzenz oder Transmission für elektromagnetische Wellen oder sonstige elektromagnetische Strahlung eines weitgehend dielektrischen Gegenstands oder Schicht, die metallhaltige Plättchen oder metallbeschichtete Partikel beinhaltet, dadurch gekennzeichnet, dass der Metallanteil der Plättchen oder Partikel bevorzugt maximal 80 nm dick ist, weiter bevorzugt maximal 30 nm dick ist, und dass ein Energieeintrag (Lichteintrag oder Hitzeeintrag etc.), beispielsweise durch einen Laser, ausreichend ist, um eine dauerhafte Formänderung des metallischen Anteils zu erreichen, und/ oder eine chemische Reaktion des metallischen Anteils auszulösen, welche die Transparenz, Transluzenz oder Transmission des Gegenstands oder Schicht für elektromagnetische Wellen wesentlich erhöht.

Bevorzugt jedoch ohne eine Beschädigung der dielektrischen Schicht oder des Gegenstandes selbst zu bewirken.

Gegenstand der vorliegenden Erfindung ist weiterhin jedes Erzeugnis des Verfahrens zur Erhöhung der Transparenz, Transluzenz oder Transmission für elektromagnetische Wellen eines weitgehend dielektrischen Gegenstands.

## Patentansprüche

1. Nachbehandlungsverfahren zur Erhöhung der Transmission von Radarwellen in lackierten Karosserieteilen, mit den Schritten:
- Bereitstellen eines lackierten Karosserieteils, welches Metalleffektpigmente, Interferenz-Metalleffektpigmente oder metallhaltige Partikel enthält, welche zumindest zum Teil einen dünnen zusammenhängenden metallischen Anteil in metallischer Form aufweisen,
- Einbringen eines Laserlichts,
**dadurch gekennzeichnet, dass** das Laserlicht so ausgebildet ist, zumindest eine Aufschmelzung, des metallischen Anteils in metallischer Form der Pigmente bzw. Partikel zu triggern, wodurch sich der Formfaktor der Pigmente bzw. Partikel ändert und dadurch die Transmission von Radarwellen erhöht ohne die Lackschicht zu zerstören und/ oder die optischen Eigenschaften des Lacks zu beeinträchtigen.

2. Verfahren nach Anspruch 1, wobei selektiv Bereiche des Karosserieteils von dem Lasereintrag geschützt oder verschont werden (Muster), beispielsweise durch selektives Laserscannen oder durch Anwendung einer Maske.

3. Verfahren nach einem der vorangehenden Ansprüche, **dadurch gekennzeichnet, dass** eine Mehrzahl lokal begrenzter Lasereinträge in dem lackierten Karosserieteil ein Muster erzeugt, welches aus Bereichen veränderter Pigmente und Bereichen nicht veränderter Pigmente besteht.

4. Verfahren nach Anspruch 2 oder 3, **dadurch gekennzeichnet, dass** durch das Muster die Durchlässigkeit bzw. Transmissionseigenschaft nur für Radarwellen erhöht wird.

5. Verfahren nach Anspruch 2 oder 3, wobei das gewählte Muster als frequenzselektive Oberfläche dient, beispielsweise zur Herstellung von Radar absorbierenden Materialien (RAM).

6. Verfahren nach mindestens einem der Ansprüche 2-5, wobei das Muster so gestaltet ist, dass die Lack-Schicht einen elektromagnetisch funktionalen Teil einer Slotantenne, Radom, Array-Antenne oder einer wellenlängenselektiven absorbierenden Fläche bildet.

7. Nachbehandlungsverfahren nach Anspruch 1, **dadurch gekennzeichnet, dass** eine verbesserte Radiowellen-, Radarwellen oder Millimeterwellen-Transmission in einem gewünschten Bereich des Karosserieteils, durch Lasern eines Schlitzradom-Musters bzw. Schlitzmusters in die Lack-Schicht erfolgt.

8. Nachbehandlungsverfahren nach Anspruch 7, **dadurch gekennzeichnet, dass** das in die Lackschicht gelaserte Muster für das menschliche Auge nicht oder kaum wahrnehmbar ist, weil die gelaserten Linien der Schlitzradom-Muster weniger als ein Zehntel Millimeter breit sind.

9. Nachbehandlungsverfahren nach einem der vorangehenden Ansprüche, **dadurch gekennzeichnet, dass** der dünne zusammenhängende metallische Anteil (in metallischer Form) der Pigmente so dünn ist, dass er für das Licht eines für das Verfahren verwendeten Lasers mit einer Wellenlänge zwischen 10600 nm (CO₂ Laser) und 266nm ( vervierfachte Frequenz eines Nd-Yag Lasers), vorzugsweise zwischen 1064 nm und 355nm, teilweise lichtdurchlässig ist , d.h. der metallische Anteil so dünn ist, dass er bei mindestens einer Wellenlänge in dem genannten Wellenlängenbereich von wenigstens 0,2% des Laserlicht durchdrungen wird.

10. Nachbehandlungsverfahren nach einem der vorangehenden Ansprüche, **dadurch gekennzeichnet, dass** sich das ursprünglich dünne Plättchen bzw. der dünne Metallanteil zumindest zum Teil verflüssigt und in einer kugelähnlichen Form wieder erstarrt.

11. Nachbehandlungsverfahren nach einem der vorangehenden Ansprüche, **dadurch gekennzeichnet, dass** der metallische Anteil in metallischer Form der Pigmente durch Mitwirkung oder Teilabsorption des Lichteintrags durch eine exotherme chemische Reaktion mit weiteren Bestandteilen des Pigments und/ oder mit laserlichtempfindlichen Füllstoffen der Matrix, in der das Pigment eingebettet ist, reagiert.

12. Nachbehandlungsverfahren nach einem der vorangehenden Ansprüche, **dadurch gekennzeichnet, dass** der metallische Anteil in metallischer Form ein vakuummetallisiertes Pigment ist, oder einen vakuummetallisierten Kern oder Schicht aufweist, vorzugsweise mit einer maximale Dicke des metallischen Kerns oder der metallischen Schicht von unter 80nm, vorzugsweise unter 32 nm , weiter bevorzugt unter 27 nm, noch weiter bevorzugt unter 25 nm, und äußerst bevorzugt zwischen 8 nm und 17 nm.

13. Nachbehandlungsverfahren nach einem der vorangehenden Ansprüche, **dadurch gekennzeichnet, dass** sich durch Anwendung des Verfahrens die Lichtwellenreflektanz oder Albedo senkrecht zur Pigmentfläche um wenigstens 6 dB, vorzugsweise 10 db, weiter vorzugsweise 12 dB, und äußerst vorzugsweise 20 db verringert, wobei hier "Lichtwellen" auch Infrarot oder Ultraviolette Wellen mit einschließt, solange die Lichtwellenlänge bei der Messung kleiner ist, als der Durchmesser des unbehandelten Pigments.

14. Nachbehandlungsverfahren nach einem der vorangehenden Ansprüche, **dadurch gekennzeichnet, dass** sich die Radio- oder Radarwellenreflektanz oder Reflexionstreuparameter (S11) oder Albedo senkrecht zur Pigmentfläche durch Anwendung des Verfahrens um wenigstens 6 dB, vorzugsweise 10 db, weiter vorzugsweise 12 dB, und äußerst vorzugsweise 20 db verringert.

15. Nachbehandlungsverfahren nach einem der vorangehenden Ansprüche, **dadurch gekennzeichnet, dass** sich durch Anwendung des Verfahrens die Radiowellen-, Radarwellen oder Millimeterwellen-Transmission, der pigmentierten Fläche des behandelten Gegenstands und für mindestens eine Lichtwellenlänge im IR, sichtbaren Licht oder UV Bereich um wenigstens 6 dB, vorzugsweise 10 db, weiter vorzugsweise 12 dB, und äußerst Vorzugsweise 20 db erhöht.

16. Nachbehandlungsverfahren nach einem der Ansprüche 1 bis 15, wobei der metallische Anteil in metallischer Form aus einem Metall oder einer Legierung mit relativ niedrigem Schmelzpunkt besteht, vorzugsweise Zinn, Zink, Blei, Silber, Kupfer oder besonders bevorzugt Aluminium, Indium, Zinn-Indium-Legierung.

17. Nachbehandlungsverfahren nach einem der Ansprüche 1 bis 16, wobei ein Teil des metallischen Anteils in metallischer Form mit einer Metalloxydschicht des metallhaltigen Partikels bzw. Pigments exotherm reagiert und der metallische Anteili zumindest zum Teil oxydiert wird (Thermitreaktion).

18. Nachbehandlungsverfahren nach einem der vorangehenden Ansprüche, wobei der Lichteintrag direkt oder indirekt durch Oberflächenspannung bei mindestens einem Pigment bzw. metallhaltigen Partikel eine Verkleinerung dessen äußerer Fläche um den Faktor 10, vorzugsweise 20, weiter vorteilhafter 30 und noch vorteilhafter 60 bewirkt, wodurch eine entsprechende Verkleinerung des Deckvermögens des Pigments entsteht, die die Transparenz und Radiowellentransmission erhöht.

19. Lackiertes Karosserieteil oder Lackschicht, das/die mindestens ein umgewandeltes Pigment bzw. metallhaltiges Partikel enthält, das gemäß einem der vorangehenden Ansprüche umgewandelt wurde, ohne dass die Lackschicht zerstört und/ oder die optischen Eigenschaften des Lacks an dieser Stelle beeinträchtigt sind.

20. Lackiertes Karosserieteil oder Lackschicht nach Anspruch 19, wobei die Schicht/ Matrix, die das Pigment/ Partikel enthält, Polyimid, Polystyrol, Polyethylen, Fluoropolymere wie Teflon, weiter vorzugsweise aus Polymethacrylimid oder eine Mischung davon enthält.

21. Verwendung eines umwandelbares Partikel, beispielsweise Plättchen, vorzugsweise Metalleffektpigmentplättchen, in einem Verfahren nach Anspruch 1 , wobei das Partikel mindestens folgendes enthält
- ein erstes Metall in metallischer Form und
- ein erstes Oxid, das das erste Metall (mit oder ohne Zwischenschichten) umhüllt.

## Claims

1. Post-treatment method for increasing the transmission of radar waves in painted body parts, comprising the steps of:
• providing a painted body part which contains metallic effect pigments, interference metallic effect pigments or metal-containing particles which at least in part have a thin continuous metallic portion in metallic form,
• introducing a laser light,
**characterized in that** the laser light is designed so as to trigger at least a melting of the metallic portion in metallic form of the pigments or particles, whereby the form factor of the pigments or particles changes and thereby increases the transmission of radar waves without destroying the paint layer and/or impairing the optical properties of the paint.

2. Method according to claim 1, wherein regions of the body part are selectively protected or spared from the laser input (pattern), for example by selective laser scanning or by the use of a mask.

3. Method according to any of the preceding claims, **characterized in that** a plurality of locally delimited laser inputs in the painted body part produces a pattern which consists of regions of altered pigments and regions of unaltered pigments.

4. Method according to claim 2 or 3, **characterized in that** the permeability or transmission property is increased by the pattern only for radar waves.

5. Method according to claim 2 or 3, wherein the selected pattern serves as a frequency-selective surface, for example for producing radar absorbing materials (RAM).

6. Method according to at least one of claims 2 to 5, wherein the pattern is designed such that the paint layer forms an electromagnetically functional part of a slot antenna, radome, array antenna or a wavelength-selective absorbing surface.

7. Post-treatment method according to claim 1, **characterized in that** an improved radio wave, radar wave or millimetre wave transmission in a desired region of the body part is achieved by lasering a slot radome pattern or slot pattern into the paint layer.

8. Post-treatment method according to claim 7, **characterized in that** the pattern lasered into the paint layer is not or barely perceptible to the human eye because the lasered lines of the slot radome pattern are less than one tenth of a millimetre wide.

9. Post-treatment method according to any of the preceding claims, **characterized in that** the thin continuous metallic portion (in metallic form) of the pigments is so thin that it is partially light-transmissive for the light of a laser used for the method having a wavelength between 10600 nm (CO₂ laser) and 266 nm (quadrupled frequency of an Nd:YAG laser), preferably between 1064 nm and 355 nm, i.e. the metallic portion is so thin that, at at least one wavelength within said wavelength range, at least 0.2% of the laser light passes through it.

10. Post-treatment method according to any of the preceding claims, **characterized in that** the originally thin platelet or the thin metal portion at least partially liquefies and resolidifies in a sphere-like shape.

11. Post-treatment method according to any of the preceding claims, **characterized in that** the metallic portion in metallic form of the pigments reacts, through the contribution or partial absorption of the light input, by an exothermic chemical reaction with further constituents of the pigment and/or with laser-light-sensitive fillers of the matrix in which the pigment is embedded.

12. Post-treatment method according to any of the preceding claims, **characterized in that** the metallic portion in metallic form is a vacuum-metallized pigment, or has a vacuum-metallized core or layer, preferably with a maximum thickness of the metallic core or of the metallic layer of less than 80 nm, preferably less than 32 nm, more preferably less than 27 nm, still more preferably less than 25 nm, and most preferably between 8 nm and 17 nm.

13. Post-treatment method according to any of the preceding claims, **characterized in that**, as a result of applying the method, the light wave reflectance or albedo perpendicular to the pigment surface is reduced by at least 6 dB, preferably 10 dB, more preferably 12 dB, and most preferably 20 dB, wherein "light waves" here also includes infrared or ultraviolet waves, provided that the light wavelength during the measurement is smaller than the diameter of the untreated pigment.

14. Post-treatment method according to any of the preceding claims, **characterized in that**, as a result of applying the method, the radio wave or radar wave reflectance or reflection scattering parameter (S11) or albedo perpendicular to the pigment surface is reduced by at least 6 dB, preferably 10 dB, more preferably 12 dB, and most preferably 20 dB.

15. Post-treatment method according to any of the preceding claims, **characterized in that**, as a result of applying the method, the radio wave, radar wave or millimetre wave transmission of the pigmented surface of the treated object and, for at least one light wavelength in the IR, visible light or UV range, is increased by at least 6 dB, preferably 10 dB, more preferably 12 dB, and most preferably 20 dB.

16. Post-treatment method according to any of claims 1 to 15, wherein the metallic portion in metallic form consists of a metal or an alloy having a relatively low melting point, preferably tin, zinc, lead, silver, copper or, particularly preferably, aluminium, indium, tin-indium alloy.

17. Post-treatment method according to any of claims 1 to 16, wherein a part of the metallic portion in metallic form reacts exothermically with a metal oxide layer of the metal-containing particle or pigment and the metallic portion is at least partially oxidized (thermite reaction).

18. Post-treatment method according to any of the preceding claims, wherein the light input, directly or indirectly by surface tension, brings about in at least one pigment or metal-containing particle a reduction of its outer surface area by a factor of 10, preferably 20, more advantageously 30 and still more advantageously 60, whereby a corresponding reduction of the hiding power of the pigment arises, which increases the transparency and the radio wave transmission.

19. Painted body part or paint layer which contains at least one converted pigment or metal-containing particle which has been converted according to any of the preceding claims, without the paint layer being destroyed and/or the optical properties of the paint being impaired at that location.

20. Painted body part or paint layer according to claim 19, wherein the layer/matrix containing the pigment/particle contains polyimide, polystyrene, polyethylene, fluoropolymers such as Teflon, further preferably polymethacrylimide, or a mixture thereof.

21. Use of a convertible particle, for example a platelet, preferably a metallic effect pigment platelet, in a method according to claim 1, wherein the particle contains at least the following:
• a first metal in metallic form, and
• a first oxide which encases the first metal (with or without intermediate layers).

## Revendications

1. Procédé de post-traitement pour augmenter la transmission des ondes radar dans des pièces de carrosserie peintes, comprenant les étapes suivantes :
• fourniture d'une pièce de carrosserie peinte qui contient des pigments à effet métallique, des pigments à effet métallique à interférences ou des particules contenant du métal qui présentent, au moins en partie, une partie métallique mince et continue sous forme métallique,
• introduction d'une lumière laser,
**caractérisé en ce que** la lumière laser est conçue de manière à déclencher au moins une fusion de la partie métallique sous forme métallique des pigments ou des particules, moyennant quoi le facteur de forme des pigments ou des particules se modifie et augmente ainsi la transmission des ondes radar sans détruire la couche de peinture et/ou sans altérer les propriétés optiques de la peinture.

2. Procédé selon la revendication **1,** dans lequel des zones de la pièce de carrosserie sont sélectivement protégées ou épargnées de l'apport laser (motif), par exemple par un balayage laser sélectif ou par l'utilisation d'un masque.

3. Procédé selon l'une quelconque des revendications précédentes, **caractérisé en ce qu'**une pluralité d'apports laser localement délimités dans la pièce de carrosserie peinte engendre un motif qui se compose de zones de pigments modifiés et de zones de pigments non modifiés.

4. Procédé selon la revendication 2 ou 3, **caractérisé en ce que** le motif augmente la perméabilité ou la propriété de transmission uniquement pour les ondes radar.

5. Procédé selon la revendication 2 ou 3, dans lequel le motif choisi sert de surface sélective en fréquence, par exemple pour la fabrication de matériaux absorbant le radar (RAM).

6. Procédé selon au moins l'une des revendications 2 à 5, dans lequel le motif est conçu de telle sorte que la couche de peinture forme une partie électromagnétiquement fonctionnelle d'une antenne à fente, d'un radôme, d'une antenne réseau ou d'une surface absorbante sélective en longueur d'onde.

7. Procédé de post-traitement selon la revendication 1, **caractérisé en ce qu'**une transmission améliorée des ondes radio, des ondes radar ou des ondes millimétriques dans une zone souhaitée de la pièce de carrosserie est obtenue par gravure au laser d'un motif de radôme à fentes ou d'un motif de fentes dans la couche de peinture.

8. Procédé de post-traitement selon la revendication 7, **caractérisé en ce que** le motif gravé au laser dans la couche de peinture n'est pas ou est à peine perceptible à l'œil humain, du fait que les lignes gravées au laser du motif de radôme à fentes ont une largeur inférieure à un dixième de millimètre.

9. Procédé de post-traitement selon l'une quelconque des revendications précédentes, **caractérisé en ce que** la partie métallique mince et continue (sous forme métallique) des pigments est suffisamment mince pour être partiellement translucide à la lumière d'un laser utilisé pour le procédé ayant une longueur d'onde comprise entre 10600 nm (laser CO₂) et 266 nm (fréquence quadruplée d'un laser Nd:YAG), de préférence entre 1064 nm et 355 nm, c'est-à-dire que la partie métallique est suffisamment mince pour être traversée, à au moins une longueur d'onde située dans ladite plage de longueurs d'onde, par au moins 0,2 % de la lumière laser.

10. Procédé de post-traitement selon l'une quelconque des revendications précédentes, **caractérisé en ce que** la plaquette initialement mince, ou la partie métallique mince, se liquéfie au moins en partie et se resolidifie sous une forme quasi sphérique.

11. Procédé de post-traitement selon l'une quelconque des revendications précédentes, **caractérisé en ce que** la partie métallique sous forme métallique des pigments réagit, par la contribution ou l'absorption partielle de l'apport de lumière, selon une réaction chimique exothermique avec d'autres constituants du pigment et/ou avec des charges sensibles à la lumière laser de la matrice dans laquelle le pigment est incorporé.

12. Procédé de post-traitement selon l'une quelconque des revendications précédentes, **caractérisé en ce que** la partie métallique sous forme métallique est un pigment métallisé sous vide, ou présente un noyau ou une couche métallisé(e) sous vide, de préférence avec une épaisseur maximale du noyau métallique ou de la couche métallique inférieure à 80 nm, de préférence inférieure à 32 nm, plus préférentiellement inférieure à 27 nm, encore plus préférentiellement inférieure à 25 nm, et de manière tout particulièrement préférée comprise entre 8 nm et 17 nm.

13. Procédé de post-traitement selon l'une quelconque des revendications précédentes, **caractérisé en ce que**, par l'application du procédé, la réflectance des ondes lumineuses ou l'albédo perpendiculairement à la surface pigmentaire diminue d'au moins 6 dB, de préférence 10 dB, plus préférentiellement 12 dB, et de manière tout particulièrement préférée 20 dB, le terme « ondes lumineuses » englobant ici également les ondes infrarouges ou ultraviolettes, pour autant que la longueur d'onde lumineuse lors de la mesure soit inférieure au diamètre du pigment non traité.

14. Procédé de post-traitement selon l'une quelconque des revendications précédentes, **caractérisé en ce que**, par l'application du procédé, la réflectance des ondes radio ou radar, ou le paramètre de dispersion en réflexion (S11), ou l'albédo perpendiculairement à la surface pigmentaire diminue d'au moins 6 dB, de préférence 10 dB, plus préférentiellement 12 dB, et de manière tout particulièrement préférée 20 dB.

15. Procédé de post-traitement selon l'une quelconque des revendications précédentes, **caractérisé en ce que**, par l'application du procédé, la transmission des ondes radio, des ondes radar ou des ondes millimétriques de la surface pigmentée de l'objet traité, ainsi que pour au moins une longueur d'onde lumineuse dans le domaine IR, de la lumière visible ou UV, augmente d'au moins 6 dB, de préférence 10 dB, plus préférentiellement 12 dB, et de manière tout particulièrement préférée 20 dB.

16. Procédé de post-traitement selon l'une quelconque des revendications 1 à 15, dans lequel la partie métallique sous forme métallique est constituée d'un métal ou d'un alliage à point de fusion relativement bas, de préférence l'étain, le zinc, le plomb, l'argent, le cuivre ou, de manière particulièrement préférée, l'aluminium, l'indium, un alliage étain-indium.

17. Procédé de post-traitement selon l'une quelconque des revendications 1 à 16, dans lequel une partie de la partie métallique sous forme métallique réagit de manière exothermique avec une couche d'oxyde métallique de la particule contenant du métal ou du pigment, et la partie métallique est au moins partiellement oxydée (réaction thermite).

18. Procédé de post-traitement selon l'une quelconque des revendications précédentes, dans lequel l'apport de lumière provoque, directement ou indirectement par tension superficielle, dans au moins un pigment ou une particule contenant du métal, une réduction de sa surface extérieure d'un facteur 10, de préférence 20, plus avantageusement 30 et encore plus avantageusement 60, d'où résulte une réduction correspondante du pouvoir couvrant du pigment, qui augmente la transparence et la transmission des ondes radio.

19. Pièce de carrosserie peinte ou couche de peinture, contenant au moins un pigment ou une particule contenant du métal transformé(e) qui a été transformé(e) selon l'une quelconque des revendications précédentes, sans que la couche de peinture soit détruite et/ou que les propriétés optiques de la peinture soient altérées à cet endroit.

20. Pièce de carrosserie peinte ou couche de peinture selon la revendication 19, dans laquelle la couche/matrice contenant le pigment/la particule contient du polyimide, du polystyrène, du polyéthylène, des fluoropolymères tels que le Téflon, plus préférentiellement du polyméthacrylimide, ou un mélange de ceux-ci.

21. Utilisation d'une particule transformable, par exemple une plaquette, de préférence une plaquette de pigment à effet métallique, dans un procédé selon la revendication 1, la particule contenant au moins ce qui suit :
• un premier métal sous forme métallique, et
• un premier oxyde qui enveloppe le premier métal (avec ou sans couches intermédiaires).
